(19) Europäisches Patentamt
European Patent Office
Office européen des brevets

(11) **EP 2 017 313 B1**

(12) **EUROPÄISCHE PATENTSCHRIFT**

(45) Veröffentlichungstag und Bekanntmachung des Hinweises auf die Patenterteilung:
**20.01.2010   Patentblatt 2010/03**

(51) Int Cl.:
***C09D 131/04*** *(2006.01)*      ***C09D 7/12*** *(2006.01)*

(21) Anmeldenummer: **08011292.3**

(22) Anmeldetag: **20.06.2008**

(54) **Beschichtungsmittel mit hoher Bewitterungsbeständigkeit, Verfahren zu deren Herstellung und deren Verwendung**

Coating agent with high weathering resistance, method for its manufacture and application

Agent de revêtement doté d'une résistance aux intempéries améliorée, son procédé de fabrication et son utilisation

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **19.07.2007   DE 102007033596**

(43) Veröffentlichungstag der Anmeldung:
**21.01.2009   Patentblatt 2009/04**

(73) Patentinhaber: **Celanese Emulsions GmbH**
**61476 Kronberg/Ts. (DE)**

(72) Erfinder:
• **Fichtner, Thomas**
**55278 Dalheim (DE)**
• **Petri, Harald**
**65326 Aarbergen (DE)**

• **Krieger, Stephan, Dr.**
**65719 Hofheim (DE)**
• **Cabrera, Ivan, Dr.**
**63303 Dreieich (DE)**

(74) Vertreter: **Ackermann, Joachim**
**Postfach 11 13 26**
**60048 Frankfurt am Main (DE)**

(56) Entgegenhaltungen:
**EP-A- 1 174 447      WO-A-2006/111290**
**DE-A1- 10 048 888      DE-A1- 10 122 786**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Beschichtungsmittel enthaltend Bindemittel auf Basis mehrstufig hergestellter Polyvinylesterdispersionen, deren Herstellung, sowie die Verwendung dieser Beschichtungsmittel, insbesondere für den Bautenschutz, wie Dispersionsfarben. Die aus diesen Dispersionsfarben hergestellten Anstriche weisen eine sehr gute Bewitterungsbeständigkeit auf, die den Dispersionsfarben enthaltend Binder auf Polyacrylatbasis vergleichbar ist.

Von Vinylestern und damit copolymerisierbaren Monomeren abgeleitete Polymerdispersionen sowie deren Verwendung als Bindemittel für Bautenschutzmittel sind bekannt und bereits mehrfach beschrieben worden. Solche Polymerdispersionen werden üblicherweise durch Emulsionspolymerisation hergestellt; die Polymerisation kann dabei ein- oder mehrstufig erfolgen. Bei den bislang bekannt gewordenen Polymerisationsverfahren werden Monomergemische in Gegenwart von Schutzkolloiden und/oder Emulgatoren durch Zugabe von Initiatoren durch radikalische Polymerisation umgesetzt. Die Zugabe der Monomeren erfolgt dabei vor oder während der radikalischen Polymerisation.

Manche Kombinationen von Monomeren sind schwer miteinander zu polymerisieren. Dieses drückt sich in deutlich voneinander unterschiedlichen Copolymerisationsparametern aus (vergl. P.A. Lowell, Emulsion Polymerization and Emulsion Polymers, Wiley, New York 1997, pp. 26-31). In solchen Fällen kann es vorkommen, dass sich keine Copolymere bilden, sondern unabhängig voneinander zwei getrennte Homopolymere entstehen. Aus dem Stand der Technik sind bereits mehrere Verfahren bekannt, um eigentlich schwer miteinander umzusetzende Monomere zu einer Ausbildung von Copolymeren zu veranlassen.

So beschreibt die EP-A-710,675 ein Verfahren zur Polymerisation von Monomeren, von denen mindestens eines eine schlechte Wasserlöslichkeit aufweist oder zur Polymerisation, bei der ein Polymer mit einer schlechten Wasserlöslichkeit entsteht. Das Verfahren beinhaltet den Einsatz eines Makromeren mit einer hydrophoben Kavität, beispielsweise eines Cyclodextrins, während der Polymerisation. In einer Variante des Verfahrens erfolgt die Copolymerisation in einem wässerigen System in Gegenwart dieses Makromeren, wobei das schlecht wasserlösliche Monomere zunächst in dem Makromeren komplexiert wird und anschließend die Polymerisation erfolgt, vorzugsweise in Gegenwart eines weiteren wasserlöslichen Monomeren. Die erhaltenen Dispersionen werden als Bindemittel für Beschichtungsmittel, als Klebstoffe, Kunststoffzusätze oder Additive für Erdölprodukte eingesetzt.

In der EP-A-381,122 wird eine zweistufige Polymerisation zur Herstellung einer Vinylacetat-Copolymeremulsion beschrieben. Das Copolymere enthält mit Vinylacetat inkompatible Comonomere. Das Verfahren beinhaltet in einer ersten Stufe die Emulsionspolymerisation von Vinylacetat und gegebenenfalls weiteren Comonomeren bis zur praktisch vollständigen Umsetzung des Vinylacetats und in einer zweiten Stufe die Zugabe und Polymerisation eines zweiten, mit Vinylacetat unverträglichen Monomeren. Das Verfahren ist dadurch gekennzeichnet, dass während der zweiten Stufe kein weiterer Stabilisator zugegeben wird und dass die Copolymerisation der zweiten Stufe sofort nach Zugabe des unverträglichen Monomeren beginnt, ohne dass sich ein Verteilungsgleichgewicht zwischen dem unverträglichen Monomeren und dem Reaktionsprodukt der ersten Stufe einstellen kann. Die erhaltenen Mehrstufenpolymerisate werden als Bindemittel für Nonwovens oder für Texilgewebe eingesetzt.

In der US-A-4,616,057 wird eine ein interpenetrierendes Netzwerk enthaltende Polymeremulsion beschrieben. Das Dokument beschreibt die mehrstufige Emulsionspolymerisation von Vinylacetat und einem damit copolymerisierbaren vernetzenden Monomer, wie N-Methylolacrylamid, und mit damit schlecht oder gar nicht copolymerisierbaren Monomeren, wie Methylmethacrylat oder Styrol. Das Verfahren umfasst in der ersten Stufe die Herstellung eines ersten Emulsionspolymerisates. Zu dem Produkt der ersten Stufe wird eine zweite Emulsion zugefügt, die ein vom Monomer der ersten Stufe unterschiedliches Monomer enthält und es wird abgewartet, bis sich ein Gleichgewicht eingestellt hat. Danach wird die zweite Stufe der Emulsionspolymerisation gestartet, und es bildet sich ein interpenetrierendes Netzwerk mit physikalisch voneinander unterscheidbaren Polymeren aus. Die erhaltenen Dispersionen werden als Binder für Nonwovens und andere textile Flächengebilde, als Beschichtungsmittel sowie als Klebstoffe eingesetzt.

EP-A-581,264 beschreibt Mischungen von Copolymeren bestehend im wesentlichen aus Vinylacetat-Ethylen-Copolymeren und ausgewählten Styrol- oder Acrylatcopolymeren mit einem vergleichsweise hohen Anteil an einpolymerisierter Acrylsäure oder an Maleinsäureanhydrid. Beschrieben werden unter anderem Dispersionen abgeleitet von Vinylacetat und -Ethylen, die mit Styrol oder ausgewählten Acrylaten sowie mit vergleichsweise hohen Mengen an Acrylsäure oder Maleinsäureanhydrid versetzt und anschließend einer Polymerisation unterzogen werden. Bedingt durch die hohen Säure(anhydrid)gehalte neigen die erhaltenen Blends oder Dispersionen zum Aufbau hoher Viskositäten. Die beschriebenen Blends werden zum Einsatz als Formmassen, zur Herstellung von Beschichtungen, als Klebstoffe oder zum Einsatz in Emulsionen vorgeschlagen.

DE 10 2006 013 898 A1 beschreibt Polymerdispersionen enthaltend mindestens zwei Copolymerisate A und B mit unterschiedlichen Glastemperaturen sowie mindestens einen ausgewählten nichtionischen Emulgator. Die Copolymerisate können in Form von Polymermischungen oder als Zweistufenpolymerisate eingesetzt werden.

DE 10 2005 032 194 A1 beschreibt wässrige Kunststoff-Dispersionen enthaltend überwiegend durch nichtionische Emulgatoren stabilisierte Mehrstufenpolymerisate. Diese leiten sich von Vinylester enthaltenden harten und weichen Monomerzusammensetzungen ab, wobei mindestens eine davon eine Silicium-organische Verbindung enthält.

Die Dispersionen lassen sich als Bindemittel in Dispersionsfarben oder Lacken einsetzen.

DE 102 36 395 A1 beschreibt wässrige Polymerdispersionen für den Korrosionsschutz mit guten Rostschutzeigenschaften. Diese enthalten phosphatgruppenhaltige Emulgatoren. In den Polymerdispersionen können unter anderem auch Mehrstufenpolymerisate eingesetzt werden.

EP 1 370 621 B1 beschreibt wässrige Kunststoff-Dispersionen auf Basis eines Vinylester-Copolymerisates, das durch Mehrstufenpolymerisation einer harten und einer weichen Monomermischung erhältlich ist und das ein ausgewähltes und überwiegend ionisches Stabilisierungssystem aufweist. Die Disperisionen lassen sich als Bindemittel in Beschichtungsmitteln einsetzen.

DE 101 26 560 C1 beschreibt die Verwendung von Mischpolymerisaten von bestimmten Copolymeren, darunter auch Vinylester-Copolymeren, in Baustoffen. Die Copolymerisation erfolgt in zwei Stufen in Gegenwart von vergleichsweise großen Mengen an Schutzkolloid. Die Produkte eignen sich zur Herstellung von gut redispergierbaren Pulvern. Diese werden als weiteres Bindemittel in Baustoffen eingesetzt, welche weitere Bindemittel aus hydraulisch abbindenden Materialien enthalten.

WO 2006/111290 A1 betrifft Beschichtungsmittel für Substrate aller Art enthaltend ein Pigment, Füllstoff und eine wässrige Dispersion eines emulgator-stabilisierten Vinylpolymeren, das mit ethylenisch ungesättigten, Silangruppen enthaltenden Monomeren oder Epoxidverbindungen copolymerisiert ist, und als Stabilisator eine Mischung aus einem nichtionischen Emulgator und einem Salz eines Bis-Esters einer sulfonierten Dicarbonsäure enthält.

DE 101 22 786 A1 beschreibt wässrige Polymerdispersionen als Überzugsmittel für z. B. feste pharmazeutische und agrochemische Darreichungsformen. Zur Herstellung der Dispersionen wird Vinylacetat in Gegenwart eines Polymerisationsreglers polymerisiert, wobei bestimmte Gewichtsverhältnisse von Schutzkolloid zu ionischem Emulgator und von Vinylacetat zu Schutzkolloid einzuhalten sind.

DE 100 48 888 A1 beschreibt wie DE 101 22 786 wässrige Polymerdispersionen als Überzugsmittel für verschiedene Anwendungen. Die Herstellung der Dispersionen erfolgt analog dem zuvor genannten Dokument und erfordert die Anwesenheit eines geeigneten Puffersystems.

EP 1 174 447 A1 bezieht sich auf ein Verfahren zur Herstellung von zweiphasigen Polymerisaten bzw. wässrigen Polymerdispersionen auf Basis von Vinylester und Ethylen und gegebenenfalls weiteren Comonomeren, die als Binde- und Beschichtungsmittel für Farben, Klebemittel, Textilien und Papier geeignet sind. Bei deren Herstellung wird in einer ersten Poylmerisationsphase bei niedrigem Ethylendruck (≤ 20 bar) und in einer zweiten Phase bei erhöhtem Ethylendruck gearbeitet.

Aufgabe der vorliegenden Erfindung ist die Bereitstellung von Beschichtungsmitteln auf der Basis von Polyvinylester-Bindemitteln, deren Verfilmungen eine sehr hohe Bewitterungsbeständigkeit aufweisen.

Für viele Anwendungsgebiete werden Beschichtungsmittel gewünscht, welche Verfilmungen mit keiner oder nur geringer Reemulgierbarkeit ergeben. Diese neigen weder zur Bildung von Wasserflecken auf der beschichteten Oberfläche noch bilden sich sogenannte Schneckenspuren aus. Außerdem weisen Verfilmungen aus solchen Beschichtungsmitteln eine geringe Wasseraufnahme auf. Es hat sich gezeigt, dass Beschichtungsmittel mit keinem oder mit nur geringen Gehalten an Schutzkolloiden und/oder an Emulgatoren dieses Eigenschaftsprofil besitzen.

Für andere Anwendungsgebiete werden Beschichtungsmittel gewünscht, welche Verfilmungen mit hoher Haftzugfestigkeit ergeben. Es hat sich gezeigt, dass Beschichtungsmittel mit Bindemitteln, welche copolymerisierte Silan- und/oder Epoxideinheiten enthalten, dieses Eigenschaftsprofil besitzen.

Überraschenderweise wurde jetzt gefunden, dass durch den Einsatz von nach einem ausgewählten und mehrstufigen Verfahren hergestellte Polyvinylesterdispersionen Beschichtungsmittel mit diesen Eigenschaften formuliert werden können, die sich darüber hinaus durch eine überraschend hohe Bewitterungsbeständigkeit auszeichnen.

In einer Ausführungsform betrifft die Erfindung Beschichtungsmittel enthaltend Pigmente und/oder Füllstoffe sowie eine Mehrstufen-Polyvinylesterdispersion, die erhältlich ist durch

i) Polymerisation von mindestens einem Vinylester einer gesättigten Carbonsäure und gegebenenfalls weiteren damit copolymerisierbaren Monomeren in Gegenwart von mindestens einem Emulgator und/oder mindestens einem Schutzkolloid bis zu einem Umsatz von mindestens 90 % der eingesetzten Monomeren,
ii) Zugabe von mindestens einem sich von dem in Schritt i) eingesetzten Vinylester unterscheidenden radikalisch polymerisierbaren Monomer in reiner Form, in Form einer Lösung oder in Form einer Emulsion zum in Schritt i) erhaltenen Polymerisationsgemisch, und
iii) Zugabe von mindestens einem Initiator der radikalischen Polymerisation nach Beendigung der Zugabe des oder der Monomeren in Schritt ii), so dass das oder die in Schritt ii) zugesetzten Monomeren in Gegenwart der in Schritt i) erzeugten Dispersion polymerisiert werden, wobei
iv) in Schritt i) und/oder in Schritt ii) mindestens ein ethylenisch ungesättigte Silangruppen enthaltendes Monomer und/oder mindestens eine ethylenisch ungesättigte Epoxidverbindung zum Einsatz kommt.

In einer weiteren Ausführungsform betrifft die Erfindung Beschichtungsmittel enthaltend Pigmente und/oder Füllstoffe sowie eine Mehrstufen-Polyvinylesterdispersion, die erhältlich ist durch

i) Polymerisation von mindestens einem Vinylester einer gesättigten Carbonsäure und gegebenenfalls weiteren damit copolymerisierbaren Monomeren in Gegenwart von mindestens einem Emulgator und/oder mindestens einem Schutzkolloid bis zu einem Umsatz von mindestens 90 % der eingesetzten Monomeren,

ii) Zugabe von mindestens einem sich von dem in Schritt i) eingesetzten Vinylester unterscheidenden radikalisch polymerisierbaren Monomer in reiner Form, in Form einer Lösung oder in Form einer Emulsion zum in Schritt i) erhaltenen Polymerisationsgemisch, und

iii) Zugabe von mindestens einem Initiator der radikalischen Polymerisation nach Beendigung der Zugabe des oder der Monomeren in Schritt ii), so dass das oder die in Schritt ii) zugesetzten Monomeren in Gegenwart der in Schritt i) erzeugten Dispersion polymerisiert werden, wobei

iv) der Gehalt an Schutzkolloid, bezogen auf den Gesamtmonomergehalt, 0 bis weniger als 1 Gew. % beträgt.

In weiteren Ausführungsformen der vorliegenden Erfindung werden die genannten Beschichtungsmittel und deren Verwendung näher spezifiziert:

- Beschichtungsmittel, **dadurch gekennzeichnet, dass** die Mehrstufen-Polyvinylesterdispersion einen Siebrückstand, bezogen auf die Mehrstufen-Polyvinylesterdispersion und gemessen mit einem 40 $\mu$m Sieb, von weniger als 0,05 Gew. %, vorzugsweise von weniger als 0,02 Gew. % aufweist.

- Beschichtungsmittel, **dadurch gekennzeichnet, dass** die Mehrstufen-Polyvinylesterdispersion einen Gehalt an Emulgatoren von bis zu 5 Gew. %, besonders bevorzugt von weniger als 3,65 Gew. % aufweist, bezogen auf die Gesamtmasse an eingesetzten Monomeren.

- Beschichtungsmittel, **dadurch gekennzeichnet, dass** die Mehrstufen-Polyvinylesterdispersion keine oder bis zu 1 Gew. % Emulgatoren enthält und zusätzlich durch weniger als 1 Gew. %, bezogen auf den Gesamtmonomergehalt, an Schutzkolloid stabilisiert ist.

- Beschichtungsmittel, **dadurch gekennzeichnet, dass** der Gehalt an einpolymerisierten Säuren und/oder Säureanhydriden in der Mehrstufen-Polyvinylesterdispersion 6 Gew. %, bezogen auf die Gesamtmonomermenge, nicht übersteigt.

- Beschichtungsmittel, **dadurch gekennzeichnet, dass** der Poylvinylester Struktureinheiten enthält, die sich ableiten von Vinylacetat und gegebenenfalls von weiteren Vinylestern von verzweigten und gesättigten $C_5$-$C_{12}$-Carbonsäuren und/oder von $\alpha$-Olefinen, vorzugsweise von Ethylen.

- Beschichtungsmittel, **dadurch gekennzeichnet, dass** der Polyvinylester Struktureinheiten enthält, die sich ableiten von Acrylat und/oder Methacrylat und/oder von Vinylester einer verzweigten und gesättigten $C_5$-$C_{12}$-Carbonsäure.

- Beschichtungsmittel, **dadurch gekennzeichnet, dass** die Mehrstufen-Polyvinylesterdispersion erhältlich ist durch Zugabe von ein oder mehreren Monomeren in Schritt ii), die ausgewählt sind aus der Gruppe der Vinylester von $C_5$-$C_{18}$-Carbonsäuren, der Acrylate, der Methacrylate, der Acrylamide, der Methacrylamide, der Bisester der Maleinsäure mit $C_1$-$C_{18}$-Alkoholen, der Biester der Fumarsäure mit $C_1$-$C_{18}$-Alkoholen und/oder der Vinylaromaten.

- Beschichtungsmittel, **dadurch gekennzeichnet, dass** die Mehrstufen-Polyvinylesterdispersion erhältlich ist durch Zugabe von einer Kombination von Vinylacetat und Ethylen in Schritt i) und durch Zugabe von mindestens einem Acrylat und/oder einem Methacrylat und/oder einem Vinylester einer verzweigten und gesättigten $C_5$-$C_{12}$-Carbonsäure in Schritt ii).

- Verwendung der Beschichtungsmittel zum Beschichten von Substraten aller Art.

- Verwendung, **dadurch gekennzeichnet, dass** die Beschichtungsmittel kunstharzgebundene Putze, pastöse Fliesenkleber, pastöse Dichtmassen und pastöse Versiegelungsmassen sowie Papierstreichmassen oder Anstrichmittel sind.

- Verwendung der Beschichtungsmittel, **dadurch gekennzeichnet, dass** die Anstrichmittel Dispersionsfarben, Dispersionslacke oder Lasuren sind.

- Verwendung der Beschichtungsmittel, **dadurch gekennzeichnet, dass** die Beschichtungsmittel Dachbeschichtungen, Fassadenfarben oder Innenfarben sind.

Verfilmungen aus diesen Beschichtungsmitteln weisen nach Freibewitterung eine außerordentlich hohe Farbtonbeständigkeit auf. Diese kann nach DIN 6174 durch Bestimmung der L-, a- und b-Werte mit einem Spektralphotometer colorguide (Fa. ByK-Gardner) bestimmt werden.

Die erfindungsgemäßen Beschichtungsmittel sind durch den Einsatz ausgewählter Mehrstufen-Polyvinylesterdispersionen als Bindemittel gekennzeichnet. Diese Bindemittel sind durch die oben beschriebene besondere Art der Herstellung gekennzeichnet. Mehrstufen-Polyvinylesterdispersionen mit gleicher Monomerzusammensetzung, die auf konventionelle Weise durch Copolymerisation sämtlicher Monomerer gemeinsam erzeugt worden sind, zeigen derartig hohe Farbtonbeständigkeiten nicht.

Bevorzugte erfindungsgemäß eingesetzte Polyvinylesterdispersionen weisen nur geringe Siebrückstände auf, beispielsweise einen Siebrückstand, gemessen mit einem 40 $\mu$m Sieb, von weniger als 0,05 Gew. %, vorzugsweise weniger als 0,02 Gew. %, besonders bevorzugt weniger als 0,008 Gew. % zeigen, bezogen auf die Dispersion.

Die Ermittlung des Siebrückstands erfolgt in Analogie zu DIN 53786. Dazu wird die Dispersion durch ein Sieb mit 40 $\mu$m Maschenweite gegeben. Der Siebrückstand wird dabei nach folgender Formel ermittelt:

$$\text{Siebrückstand (\%)} = [(G1 - G2) \times 100] / \text{Einwaage}$$

Dabei bedeuten

G1 das Gewicht des getrockneten Siebes mit Koagulat in g
G2 das Gewicht des getrockneten Siebes ohne Koagulat in g, und
Einwaage die Menge der Dispersion in g, welche durch das Sieb gegeben wurde.

Bevorzugt eingesetzt werden die oben beschriebenen Mehrstufen-Polyvinylesterdispersionen, die einen Gehalt an Emulgatoren von bis zu 5,0 Gew. %, besonders bevorzugt bis zu 3,65 Gew. %, ganz besonders bevorzugt von bis zu 3 Gew. %, insbesondere von weniger als 1 Gew. % aufweisen, bezogen auf die Gesamtmasse an eingesetzten Monomeren. Ganz besonders bevorzugt eingesetzt werden die oben beschriebenen Mehrstufen-Polyvinylesterdispersionen, die keine oder bis zu 3 Gew. %, insbesondere bis zu 1 Gew. % Emulgatoren enthalten und die zusätzlich durch Schutzkolloide stabilisiert sind, vorzugsweise von weniger als 1 Gew. %, bezogen auf den Gesamtmonomergehalt, an Schutzkolloiden.

Ebenfalls bevorzugt eingesetzt werden die oben beschriebenen Mehrstufen-Polyvinylesterdispersionen, bei denen der Gehalt an Säuregruppen und/oder Säureanhydridgruppen enthaltenden Struktureinheiten 6 Gew. %, besonders bevorzugt 3 Gew. %, bezogen auf die Gesamtmonomermenge, nicht übersteigt.

Unter dem Begriff "in reiner Form" ist im Rahmen dieser Beschreibung zu verstehen, dass die Monomeren ohne weitere Zusätze dem Polymerisationsansatz zugegeben werden. Eine besondere Aufreinigung der Monomeren ist nicht erforderlich. Mehrstufen-Polvinylesterdispersionen bei denen das Monomer in Schritt ii) in der Form einer Emulsion eingesetzt wird, sind in US-A-4,616,057 beschrieben.

Besonders bevorzugt werden Mehrstufen-Polvinylesterdispersionen eingesetzt, bei denen das Monomer in Schritt ii) reiner Form eingesetzt wird.

Es wird angenommen, dass durch die Zugabe der Monomeren in Schritt ii) unter Bedingungen, in denen im Polymerisationsgemisch praktisch keine Polymerisationsreaktionen mehr ablaufen, und das Abwarten bis zum Neustart der Polymerisation in Schritt iii), sich ein Verteilungsgleichgewicht zwischen dem in Stufe ii) zugesetzten Monomeren und dem Reaktionsprodukt der Stufe i) einstellt. Die im Vergleich zu Wasser in Schritt ii) zugesetzten hydrophoben Monomeren diffundieren wahrscheinlich vollständig in die in Schritt i) hergestellten Polymerteilchen und werden beim Neustart der Polymerisation in diesen Teilchen polymerisiert. Diese Form der Emulsionspolymerisation wird daher auch als Einschlusspolymerisation bezeichnet.

Der Neustart der Polymerisation in Schritt iii) kann unmittelbar nach der Zugabe des oder der Monomeren in Schritt ii) erfolgen oder das Polymerisationsgemisch wird noch eine Zeit stehen gelassen, beispielsweise 10 bis 60 Minuten, bevor der Initiator zugesetzt wird, um Schritt iii) zu starten.

Die durch Einschlusspolymerisation hergestellten Polymerteilchen sind im allgemeinen größer als die Teilchen gleicher Monomerzusammensetzung hergestellt durch herkömmliche Emulsionspolymerisation. Typischerweise sind die mittleren Teilchengrößen der durch Einschlusspolymerisation hergestellten Dispersionen mindestens 10 % größer als die mittleren Teilchengrößen von durch herkömmliche einstufige Emulsionspolymerisation hergestellten Dispersionen gleicher Monomerzusammensetzung.

Außerdem unterscheiden sich die Glasübergangstemperaturen der durch Einschlusspolymerisation hergestellten Dispersionen von den Glasübergangstemperaturen von Dispersionen mit Teilchen gleicher Monomerzusammensetzung, die durch herkömmliche einstufige Emulsionspolymerisation hergestellt worden sind.

Die Glasübergangstemperaturen der erfindungsgemäß eingesetzten Mehrstufen-Polyvinylester können in weiten Bereichen variieren. Für typische erfindungsgemäß eingesetzte Copolymerisate bewegen sich diese im Bereich von -50°C bis +110°C, bevorzugt von -30°C bis +40°C, ermittelt mit Differential Scanning Calorimetrie bei einer Aufheizgeschwindigkeit von 10K/Minute. Die Glasübergangstemperaturen der Mehrstufen-Polyvinylester können vom Fachmann in an sich bekannter Weise durch Auswahl der Monomerkombinationen eingestellt werden.

Die zur Herstellung der erfindungsgemäß eingesetzten Bindemittel verwendeten Monomeren sind an sich bekannt.

Zu den in Schritt i) eingesetzten Vinylestern einer gesättigten Carbonsäure zählen Vinylester von geradkettigen und/oder verzweigten aliphatischen Carbonsäuren mit ein bis achtzehn Kohlenstoffatomen. Ferner können zusätzlich Vinylester von aromatischen Carbonsäuren verwendet werden. Diese Vinylester enthalten neben dem Vinylrest keine weiteren funktionelle Gruppen, wie z.B. vernetzend wirkende Acetoacetatgruppen.

Zu den bevorzugten Monomeren dieses Typs zählen Vinylformiat, Vinylacetat, Vinylpropionat, Vinylbutyrat, Vinylisobutyrat, Vinylpivalat, Vinyl-2-ethylhexanoat, Vinylester von gesättigten verzweigten Monocarbonsäuren mit 9 bis 11 Kohlenstoffatomen im Säurerest, Vinylester von längerkettigen gesättigten oder ungesättigten Fettsäuren, wie beispielsweise Vinyllaurat oder Vinylstearat sowie Vinylester der Benzoesäure und substituierter Derivate der Benzoesäure wie Vinyl-p-tert.-butylbenzoat. Unter diesen ist Vinylacetat besonders bevorzugt.

Die genannten Vinylester können bei der Herstellung der erfindungsgemäß eingesetzte Dispersionen in Schritt i) einzeln verwendet werden oder bevorzugt im Gemisch mit anderen Monomeren vorliegen, die Vinylester oder keine Vinylester sein können. Der Anteil der Vinylester in Schritt i), bezogen auf die in diesem Schritt eingesetzte Gesamtmonomermenge, beträgt in der Regel mindestens 40 Gew.-%, vorzugsweise mindestens 70 Gew.-%.

Bei der Herstellung der erfindungsgemäß eingesetzten Mehrstufen-Polyvinylesterdispersionen können in Schritt i) gegebenenfalls weitere Monomere eingesetzt werden. Dabei handelt es sich um ethylenisch ungesättigte Comonomere, die mit Vinylestern gesättigter Carbonsäuren copolymerisiert werden können. Dabei kann es sich um Comonomere handeln, die sich einfach mit den Vinylestern copolymerisieren lassen; es sind aber auch Comonomere einsetzbar, die sich nur in geringen Mengen zusammen mit den Vinylestern copolymerisieren lassen. Der Fachmann wird in diesen Fällen die Mengen der einzelnen Monomeren so wählen, dass die vorgelegten Comonomeren in der Copolymerisation verbraucht werden.

Bevorzugt gegebenenfalls in Schritt i) eingesetzte Comonomere sind ethylenisch ungesättigte aliphatische oder cycloaliphatische Kohlenwasserstoffe, insbesondere α-Olefine mit 2-12 Kohlenstoffatomen, wie Ethylen, Propylen und/oder Butylen; sowie halogenierte ungesättigte aliphatische Kohlenwasserstoffe, beispielsweise Vinylchlorid, Vinylfluorid, Vinylidenchlorid, und/oder Vinylidenfluorid. Der Anteil dieser Comonomeren an der in Schritt i) eingesetzten Gesamtmonomermenge beträgt bis zu 50 Gew.-%, vorzugsweise bis zu 25 Gew.-%.

Weitere gegebenenfalls in Schritt i) eingesetzte Comonomere sind α,β-ungesättigte Monocarbonsäuren, beispielsweise Acrylsäure, Methacrylsäure und/oder Itaconsäure. Weiterhin können α,β-ungesättigte Dicarbonsäuren, beispielsweise Maleinsäure, Fumarsäure, Itaconsäure und/oder Citraconsäure eingesetzt werden. Der Anteil dieser Comonomeren an der in Schritt i) eingesetzten Gesamtmonomermenge beträgt bis zu 5 Gew.-%, vorzugsweise bis zu 3 Gew.-%.

Weitere bevorzugt gegebenenfalls in Schritt i) eingesetzte Comonomere sind ethylenisch ungesättigte Sulfonsäuren und/oder ethylenisch ungesättigte Phosphonsäuren bzw. deren Salze, vorzugsweise Vinylsulfonsäure, Vinylphosphonsäure und/oder 2-Acrylamido-2-methyl-propansulfonsäure. Der Anteil dieser Comonomeren an der in Schritt i) eingesetzten Gesamtmonomermenge beträgt bis zu 5 Gew.-%, vorzugsweise bis zu 3 Gew-%.

Weitere bevorzugt gegebenenfalls in Schritt i) eingesetzte Comonomere sind Ester von α,β-ungesättigten Monocarbonsäuren und/oder Mono- oder vorzugsweise Diester von α,β-ungesättigten Dicarbonsäuren mit primären, sekundären und/oder tertiären gesättigten einwertigen Alkoholen mit 1 bis 20 Kohlenstoffatomen. Dabei kann es sich beispielsweise um die Methyl-, Ethyl-, Propyl-, Butyl- oder die 2-Ethylhexylester der Acrylsäure, der Methacrylsäure und/oder der Itaconsäure bzw. um die entsprechenden Mono- oder insbesondere Diester der Maleinsäure, Fumarsäure oder Citraconsäure sowie um die Ester der genannten Mono- und/oder Dicarbonsäuren mit cycloaliphatischen oder polycyclischen Alkoholen sowie von Fettalkoholen handeln. Der Anteil dieser Comonomeren an der in Schritt i) eingesetzten Gesamtmonomermenge beträgt bis zu 25 Gew.-%, vorzugsweise bis zu 15 Gew.-%.

Weitere bevorzugt gegebenenfalls in Schritt i) eingesetzte Comonomere sind epoxyfunktionelle, ethylenisch ungesättigte Verbindungen, wie Glycidylmethacrylat, Glycidylacrylat und/oder Vinyl-epoxycyclohexan. Der Anteil dieser Comonomeren an der in Schritt i) eingesetzten Gesamtmonomermenge beträgt bis zu 10 Gew.-%, vorzugsweise bis zu 5 Gew.-%.

Weitere bevorzugt gegebenenfalls in Schritt i) eingesetzte Comonomere sind siliziumfunktionelle, ethylenisch ungesättigte Verbindungen, wie Acryloyloxy-alkyltri(alkoxy)- und Methacryloyloxyalkyltri(alkoxy)-Silane, Vinyltrialkoxysilane und/oder Vinylalkyldialkoxysilane. Der Anteil dieser Comonomeren an der in Schritt i) eingesetzten Gesamtmonomermenge beträgt bis zu 10 Gew.-%, vorzugsweise bis zu 5 Gew.-%.

In einer Variante der erfindungsgemäß eingesetzten Mehrstufen-Polyvinylesterdispersionen wird neben dem Vinylester gesättigter Carbonsäuren mindestens ein ethylenisch ungesättigtes Silangruppen enthaltendes Comonomer und/oder mindestens eine ethylenisch ungesättigte Epoxidverbindung eingesetzt. In der zweiten Variante der erfindungsgemäß eingesetzten Mehrstufen-Polyvinylesterdispersionen ist der zwingende Einsatz dieser Comonomeren nicht erforderlich, allerdings bevorzugt.

Weitere bevorzugt gegebenenfalls in Schritt i) eingesetzte Comonomere sind mehrfach ethylenisch ungesättigte, und damit vernetzend wirkende Comonomere, beispielsweise Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)-acrylat, Vinylcrotonat, Methylenbisacrylamid, Hexandioldiacrylat, Pentaerythroldiacrylat und Trimethylolpropantriacrylat oder Gemische von zwei oder mehreren Verbindungen aus dieser Gruppe. Der Anteil dieser Comonomeren an der in Schritt i) eingesetzten Gesamtmonomermenge beträgt bis zu 10 Gew.-%, vorzugsweise bis zu 2 Gew. %.

Weitere bevorzugt gegebenenfalls in Schritt i) eingesetzte Comonomere sind hydroxyfunktionelle Ester ungesättigter Carbonsäuren, wie Hydroxyethyl-(meth)-acrylat, Hydroxypropyl(meth)acrylat sowie deren Addukte mit Ethylenoxid oder Propylenoxid. Der Anteil dieser Comonomeren an der in Schritt i) eingesetzten Gesamtmonomermenge beträgt bis zu 25 Gew.-%, vorzugsweise bis zu 15 Gew.-%.

Weitere bevorzugt gegebenenfalls in Schritt i) eingesetzte Comonomere sind vernetzbare Gruppen, wie Carbonylgruppen oder N-Methylolgruppen enthaltende ethylenisch ungesättigte Verbindungen. Beispiele dafür sind Diacetonacrylamid, Allylacetoacetat, Vinylacetoacetat, Acetoacetoxyethyl(meth)acrylat, N-Ethanol-(meth)acrylamid, N-Propanol(meth)acrylamid, (Meth)acrylamid, Allylcarbamat, Acrylnitril, die N-Methylolester, -alkylether oder Mannichbasen des N-Methylol-(meth)acrylamids oder N-Methylolallylcarbamats, Acrylamidoglykolsäure und/oder deren Salze, Acrylamidomethoxyessigsäuremethylester, N-(2,2-Dimethoxy-1-hydroxyethyl)acrylamid, N-Dimethylaminopropyl(meth)acrylamid, N-Methyl(meth)-acrylamid, N-Butyl(meth)acrylamid, N-Cyclohexyl(meth)acrylamid, N-Dodecyl(meth)-acrylamid, N-Benzyl(meth)acrylamid, p-Hydroxyphenyl(meth)acrylamid, N-(3-Hy-droxy-2,2-dimethylpropyl)methacrylamid, Ethylimidazolidonmethacrylat oder N-Vinylformamid, N-Vinylpyrrolidon. Der Anteil dieser Comonomere an der in Schritt i) eingesetzten Gesamtmonomermenge beträgt bis zu 10 Gew.-%, vorzugsweise bis zu 5 Gew.-%.

Der Anteil der neben den Vinylestern in Schritt i) eingesetzten sonstigen Comonomeren kann zusammengenommen bis zu 60 Gew.-% betragen.

In Schritt ii) des oben beschriebenen Verfahrens können die oben genannten Monomeren eingesetzt werden. Bei den im Einzelfall in Schritt ii) eingesetzten Monomeren unterscheidet sich mindestens eines der in Schritt ii) eingesetzten Monomeren von den in Schritt i) eingesetzten Monomeren.

Grundsätzlich können in Schritten i) und ii) des oben beschriebenen Verfahrens beliebige Kombinationen der oben genannten Monomeren eingesetzt werden, wobei in Schritt i) allerdings mindestens ein Vinylester einer gesättigten Carbonsäure zum Einsatz kommt. Vorzugsweise überschreitet dabei die Gesamtmenge der eingesetzten Monomeren mit Säuregruppen und/oder mit Anhydridgruppen 6 Gew. %, bezogen auf die Gesamtmonomermenge, nicht.

Bei den in Schritt ii) einsetzbaren Monomerklassen handelt es sich also in der Regel um Vinylester von geradkettigen und/oder verzweigten aliphatischen Carbonsäuren mit ein bis achtzehn Kohlenstoffatomen, um Vinylester von aromatischen Carbonsäuren, um ethylenisch ungesättigte aliphatische oder cycloaliphatische Kohlenwasserstoffe, um Vinylaromaten, insbesondere um Styrol, $\alpha$-Methylstyrol, Vinyltoluol und/oder Vinylxylol, um halogenierte ungesättigte aliphatische Kohlenwasserstoffe, um $\alpha,\beta$-ungesättigte Mono- und/oder Dicarbonsäuren, um ethylenisch ungesättigte Sulfon- und/oder Phosphonsäuren bzw. deren Salze, um Ester von $\alpha,\beta$-ungesättigten Monocarbonsäuren mit primären, sekundären und/oder tertiären gesättigten einwertigen Alkoholen mit 1 bis 20 Kohlenstoffatomen, um Mono- oder vorzugsweise Diester von $\alpha,\beta$-ungesättigten Dicarbonsäuren mit primären, sekundären und/oder tertiären gesättigten einwertigen Alkoholen mit 1 bis 20 Kohlenstoffatomen, um epoxyfunktionelle, ethylenisch ungesättigte Verbindungen, um siliziumfunktionelle, ethylenisch ungesättigte Verbindungen, um mehrfach ethylenisch ungesättigte, und damit vernetzend wirkende Comonomere, um hydroxyfunktionelle Ester ungesättigter Carbonsäuren sowie um vernetzbare oder selbstvernetzende ethylenisch ungesättigte Comonomere,

Die Gewichtsverhältnisse der in den Schritten i) und ii) des oben beschriebenen Verfahrens eingesetzten Monomeren können in weiten Bereichen variiert werden, beispielsweise von 10 : 90 bis 90 : 10, bevorzugt 80 : 20 bis 20 : 80 und besonders bevorzugt 60 : 40 bis 40 : 60. Die im Einzelfall auszuwählenden Mengenverhältnisse werden von der Natur der einzelnen Monomeren sowie von den im Einzelfall gewünschten Eigenschaften abhängen und können vom Fachmann in an sich bekannter Weise ausgewählt werden.

Bevorzugt kommen bei der Herstellung der erfindungsgemäß eingesetzten Mehrstufen-Polyvinylesterdispersionen in den Schritten i) und ii) unterschiedliche Vinylester gesättigter Carbonsäuren zum Einsatz, ganz besonders bevorzugt wird in Schritt i) eine Kombination von mindestens einem Vinylester gesättigter Carbonsäuren mit mindestens einem $\alpha$-Olefin, insbesondere mit Ethylen, eingesetzt.

In einer weiteren bevorzugten Variante der erfindungsgemäß eingesetzten Mehrstufen-Polyvinylesterdispersion kommen in Schritt ii) Monomere zum Einsatz, die sich nur schlecht mit Vinylestern gesättigter Carbonsäuren copolymerisieren lassen. Dazu zählen insbesondere Vinylaromaten und/oder Ester von Mono- oder Dicarbonsäuren, ganz besonders Styrol, Acrylate und/oder Methacrylate.

Überraschend wurde gefunden, dass sich diese an sich mit Vinylestern gesättigter Carbonsäuren schlecht oder fast gar nicht copolymerisierbaren Monomeren durch das erfindungsgemäße Verfahren in großen Mengen in die Polymerdispersion einbauen lassen. Es kann bislang allerdings nicht genau erklärt werden, in welcher Weise dieser Einbau erfolgt. Dieses scheint von der in Schritten i) und ii) eingesetzten Monomerkombination beeinflusst zu werden. Bei manchen Systemen scheinen Teilchen aus gepfropften Copolymeren zu entstehen; bei anderen Systemen hingegen wurden mehrmodale Teilchengrößenverteilungen beobachtet und es wurden Hinweise darauf gefunden, dass unterschiedliche Teilchen mit unterschiedlichem chemischem Aufbau entstehen. Gemeinsam ist allen diesen Mehrstufen-Polyvinylesterdispersionen, dass diese bei Einsatz als Bindemittel in Beschichtungszusammensetzungen Verfilmungen mit einer außerordentlich hohen Bewitterungsbeständigkeit ergeben im Vergleich mit Verfilmungen aus Beschichtungszusammensetzungen, die als Bindemittel in einem Schritt hergestellten Dispersionen aus gleichen Monomerkombinationen enthalten.

Besonders bevorzugt werden mehrstufig erzeugte Polyvinylesterdispersionen eingesetzt, bei denen in Stufe i) Monomere der Typen A1, A2 und gegebenenfalls A4 und/oder gegebenenfalls A5 und/oder gegebenenfalls A6; oder Monomere der Typen A1, A3 und gegebenenfalls A4 und/oder gegebenenfalls A5 und/oder gegebenenfalls A6; oder Monomere der Typen A1, A2, A3 und gegebenenfalls A4 und/oder gegebenenfalls A5 und/oder gegebenenfalls A6 eingesetzt werden und bei denen in Stufe ii) Monomere der Typen A3 und/oder A7 eingesetzt werden.

Bei den Monomeren des Typs A1 handelt es sich um Vinylester von geradkettig oder verzweigten aliphatischen gesättigten Carbonsäuren der Kettenlänge $C_1$-$C_4$, beispielsweise um Vinylformiat, Vinylacetat, Vinylpropionat, Vinylbutyrat oder Vinylisobutyrat. Vinylacetat ist bevorzugt. Die Vinylester A1 können in der Polyvinylesterdispersion auch in Kombination von zwei oder mehreren davon nebeneinander vorliegen.

Der Anteil der Monomeren A1, gegebenenfalls in Kombination mit weiteren Comonomeren aus dieser Gruppe, beträgt 40 bis 100 Gew.-%, vorzugsweise 70 bis 90 Gew. %, bezogen auf die Gesamtmenge der in Schritt i) eingesetzten Monomeren.

Bei den Monomeren des Typs A2 handelt es sich um verzweigte oder geradkettige $\alpha$-Olefine mit 2 bis 8 C-Atomen, beispielsweise um Prop-1-en, But-1-en, Pent-1-en, Hex-1-en, Hept-1-en, Oct-1-en und insbesondere um Ethylen,

Der Anteil der Monomeren A2, gegebenenfalls in Kombination mit weiteren Comonomeren aus dieser Gruppe, beträgt 0 bis 45 Gew.-%, bevorzugt 5 bis 45 Gew.-%, besonders bevorzugt 8 bis 25 Gew. %, ganz besonders bevorzugt 10 bis 20 Gew.-%, bezogen auf die Gesamtmenge der in Schritt i) eingesetzten Monomeren.

Bei den Monomeren des Typs A3 handelt es sich um Vinylester von geradkettigen oder verzweigten aliphatischen gesättigten Carbonsäuren der Kettenlänge $C_5$-$C_{18}$, beispielsweise um Vinylester von $\alpha$-verzweigten Carbonsäuren mit 5 bis 11 Kohlenstoffatomen im Säurerest ($^{®}$Versaticsäuren), die Vinylester der Pivalin-, 2-Ethylhexan-, Laurin-, Palmitin-, Myristin- und Stearinsäure. Vinylester von Versaticsäuren, insbesondere VeoVa$^{®}$ 9, VeoVa$^{®}$ 10 und VeoVa$^{®}$ 11, sind bevorzugt. Die Vinylester A3 können in der Polyvinylesterdispersion auch in Kombination von zwei oder mehreren davon nebeneinander vorliegen.

Der Anteil der Monomeren A3, gegebenenfalls in Kombination mit weiteren Comonomeren aus dieser Gruppe, beträgt 0 bis 60 Gew.-%, bevorzugt 2 bis 40 Gew.-%, besonders bevorzugt 4 bis 30 Gew. %, ganz besonders bevorzugt 5 bis 25 Gew.-%, bezogen auf die Gesamtmenge der in Schritt i) eingesetzten Monomeren.

Bei den Monomeren des Typs A4 handelt es sich um ethylenisch ungesättigte Silangruppen enthaltende Monomere, beispielsweise um Monomere der allgemeinen Formel $RSi(CH_3)_{0-2}(OR^1)_{3-1}$, wobei R die Bedeutung $CH_2=CR^2$-$(CH_2)_{0-1}$ oder $CH_2=CR^2CO_2$-$(CH_2)_{1-3}$ hat, $R^1$ ein unverzweigter oder verzweigter, gegebenenfalls substituierter Alkylrest mit 1 bis 12 C-Atomen ist, der gegebenenfalls durch eine Ethergruppe unterbrochen sein kann, und $R^2$ für H oder $CH_3$ steht. Anstelle oder ergänzend zu diesen Monomeren können als Monomere des Typs A4 auch ethylenisch ungesättigte Epoxidverbindungen, wie Glycidylmethacrylat oder Glycidylacrylat eingesetzt werden. Bevorzugt werden Kombinationen von ethylenisch ungesättigten Silangruppen enthaltenden Monomeren und ethylenisch ungesättigten Epoxidverbindungen eingesetzt.

Bevorzugte ethylenisch ungesättigte Silangruppen enthaltende Monomere des Typs A4 sind Silane der Formeln $CH_2=CR^2$-$(CH_2)_{0-1}Si(CH_3)_{0-1}(OR^1)_{3-2}$ und $CH_2=CR^2CO_2$-$(CH_2)_3Si(CH3)_{0-1}(OR^1)_{3-2}$, wobei $R^1$ ein verzweigter oder unverzweigter Alkylrest mit 1 bis 8 C-Atomen ist und $R^2$ für H oder $CH_3$ steht.

Besonders bevorzugte Silane des Typs A4 sind Vinylmethyl-dimethoxy-silan, Vinylmethyl-diethoxy-silan, Vinylmethyl-di-n-propoxy-silan, Vinylmethyl-di-iso-propoxy-silan, Vinylmethyl-di-n-butoxy-silan, Vinylmethyl-di-sec.-butoxy-silan, Vinylmethyl-di-tert.-butoxy-silan, Vinylmethyl-di-(2-methoxyisopropyloxy)-silan und Vinylmethyl-dioctyloxy-silan.

Weitere Beispiele für bevorzugte Silane sind $\gamma$-(Meth)acryloxypropyl-tris-(2-methoxyethoxy)-silan, $\gamma$-(Meth)acryloxypropyl-tris-methoxy-silan, $\gamma$-(Meth)acryloxypropyl-tris-ethoxy-silan, $\gamma$-(Meth)acryloxypropyl-tris-n-propoxy-silan, $\gamma$-(Meth)acryloxypropyl-tris-iso-propoxy-silan, $\gamma$-(Meth)acryloxypropyl-tris-butoxy-silan, $\gamma$-Acryloxypropyl-tris-(2-me-

thoxy-ethoxy)-silan, γ-Acryloxypropyl-tris-methoxy-silan, γ-Acryloxypropyl-tris-ethoxy-silan, γ-Acryloxypropyl-tris-n-propoxy-silan, γ-Acryloxypropyl-tris-iso-propoxy-silan, γ-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-tris-iso-propoxy-silan und Vinyl-tris-butoxy-silan. Die genannten Silanverbindungen können gegebenenfalls auch in Form ihrer (Teil)hydrolysate eingesetzt werden.

Der Anteil der Monomeren A4, gegebenenfalls in Kombination mit weiteren Comonomeren aus dieser Gruppe, beträgt 0 bis 10 Gew.-%, bevorzugt 0,5 bis 5 Gew.-%, bezogen auf die Gesamtmenge der in Schritt i) eingesetzten Monomeren.

Bei den Monomeren des Typs A5 handelt es sich um ethylenisch ungesättigte Verbindungen, die mindestens eine stabilisierende nichtionische oder ionische Gruppe, vorzugsweise eine Säuregruppe, im Molekül aufweisen, die das Emulsionspolymer zusätzlich über polymergebundene funktionelle Gruppen und/oder Ladungen stabilisieren.

Als Comonomere A5 mit stabilisierenden nichtionischen Gruppen eignen sich insbesondere Ester von ethylenisch ungesättigten aliphatischen Mono- und/oder Dicarbonsäuren mit Polyalkylenglykolen, vorzugsweise mit Polyethylenglykolen und/oder Polypropylenglykolen, oder Ester von ethylenisch ungesättigten Carbonsäuren mit Aminoalkoholen, wie (Meth)acrylsäureester von Aminoalkoholen, beispielsweise von Diethylaminoethanol, und/oder (Meth)acrylsäureester mit Dimethylaminoethanol, sowie (Meth)acrylsäureester mit zweiwertigen aliphatischen Alkoholen der Kettenlänge $C_2$-$C_{18}$, bei denen nur eine Alkoholgruppe verestert ist. Ferner eignen sich Amide von ethylenisch ungesättigten Carbonsäuren, wie Amide der Acryl- und Methacrylsäure und N-Methylolamide der Acryl- und Methacrylsäure sowie deren Ether. Eine weitere Gruppe dieser Monomeren sind N-Vinylamide einschließlich der N-Vinyllactame, beispielsweise Vinylpyrrolidon oder N-Vinyl-N-methylacetamid.

Als Comonomere A5 mit stabilisierenden ionischen Gruppen eignen sich ethylenisch ungesättigte Carbonsäuren oder Sulfonsäuren, die ein- oder zwei Carboxylgruppen oder eine Sulfonsäuregruppe aufweisen. Anstelle der freien Säuren können auch deren Salze, vorzugsweise Alkali- oder Ammoniumsalze eingesetzt werden.

Beispiele dafür sind Acrylsäure, Methacrylsäure, Crotonsäure, Maleinsäure, Fumarsäure, Itaconsäure, Vinylsulfonsäure, Styrolsulfonsäure, Halbester der Maleinsäure, der Fumarsäure und/oder der Itaconsäure mit einwertigen aliphatischen gesättigten Alkoholen der Kettenlänge $C_1$-$C_{18}$ sowie deren Alkali- und Ammoniumsalze oder (Meth)acrylsäureester von Sulfoalkanolen, beispielsweise Natrium-2-sulfoethylmethacrylat.

Besonders bevorzugte Comonomere des Typs A5 sind Acrylsäure, Methacrylsäure, Crotonsäure, Itaconsäure und/oder Vinylsulfonsäure.

Die Menge der gegebenenfalls vorhandenen weiteren Comonomeren A5, gegebenenfalls in Kombination mit weiteren Comonomeren aus dieser Monomergruppe, beträgt vorzugsweise bis zu 5 Gew.-% , insbesondere bis zu 3 Gew.-%, bezogen auf die Gesamtmenge der in Schritt i) eingesetzten Monomeren.

Bei den Monomeren des Typs A6 handelt es sich um beliebige weitere ethylenisch ungesättigte Verbindungen, die nicht zu den Monomeren der Typen A1 bis A5 zählen und die mit den Monomeren der Typen A1 bis A5 gut oder weniger gut copolymerisierbar sind. Beispiele für Monomere des Typs A6 sind Ester gesättigte aliphatischer Monocarbonsäuren mit einwertigen ungesättigten Alkoholen der Kettenlänge $C_3$-$C_{18}$, Ester ethylenisch ungesättigter Mono- oder Dicarbonsäuren, insbesondere von Acrylsäure und/oder Methacrylsäure, mit einwertigen aliphatischen gesättigten Alkoholen, halogenierte Olefine, wie Vinylchlorid, Vinylidenchlorid und/oder Tetrafluorethylen; ethylenisch ungesättigte Nitrile, wie Acrylnitril und/oder Methacrylnitril; mehrfach ethylenisch ungesättigte gegebenenfalls halogenierte Kohlenwasserstoffe, wie Butadien, 2-Chlorbutadien, 2,3-Dichlorbutadien und/oder Isopren; $C_9$-$C_{16}$ alpha-Olefine; Vinylaromaten, wie Styrol; Vinylether von einwertigen aliphatischen gesättigten Alkoholen der Kettenlänge $C_1$-$C_{18}$; Divinyl- und/oder Diallylester von gesättigten und ungesättigten aliphatischen Dicarbonsäuren der Kettenlänge $C_3$-$C_{18}$; Vinyl- und Allylester der Acrylsäure und Crotonsäure; sowie Triallylcyanurat.

Die Menge der gegebenenfalls vorhandenen weiteren Comonomeren A6, gegebenenfalls in Kombination mit weiteren Comonomeren aus dieser Monomergruppe, beträgt typischerweise bis zu 10 Gew.-% , vorzugsweise bis zu 8 Gew.-%, bezogen auf die gesamte in Schritt i) eingesetzten Monomeren.

Bei den Monomeren des Typs A7 handelt es sich um eine Untergruppe der Monomeren des Typs A6, welche in Schritt ii) des erfindungsgemäßen Verfahrens eingesetzt werden können. Monomere des Typs A7 sind dadurch gekennzeichnet, dass diese sich mit Vinylestern von gesättigten Carbonsäuren nur schwierig copolymerisieren lassen. Zu den Monomeren des Typs A7 zählen Ester ethylenisch ungesättigter Monocarbonsäuren mit einwertigen aliphatischen gesättigten Alkoholen, Diester ethylenisch ungesättigter Dicarbonsäuren mit einwertigen aliphatischen gesättigten Alkoholen und/oder Vinylaromaten.

Die Monomeren des Typs A7 werden in Schritt ii) des oben beschriebenen Verfahrens bevorzugt allein oder in der Form von Gemischen aus Monomeren dieser Gruppe eingesetzt, gegebenenfalls in Kombination mit Monomeren der Typen A4 und/oder A5.

In einer weiteren bevorzugten Variante des oben beschriebenen Verfahren werden in Schritt ii) die Monomeren des Typs A3 allein oder in der Form von Gemischen aus Monomeren dieser Gruppe eingesetzt, gegebenenfalls in Kombination mit Monomeren der Typen A4 und/oder A5.

Besonders bevorzugt werden Mehrstufen-Polyvinylesterdispersionen eingesetzt, die ein durch mehrstufige Copolymerisation erzeugtes Polymer mit Struktureinheiten enthalten, die sich von Vinylestern von $C_5$-$C_{18}$-Carbonsäuren, Acrylaten, Methacrylaten, Acrylamiden, Methacrylamiden, Bisestern der Maleinsäure mit $C_1$-$C_{18}$-Alkoholen, Bisestern der Fumarsäure mit $C_1$-$C_{18}$-Alkoholen und/oder Vinylaromaten ableiten, besonders bevorzugt von Vinylestern von $C_5$-$C_{18}$-Carbonsäuren, Estern der Acrylsäure und/oder der Methacrylsäure mit $C_1$-$C_{18}$-Alkoholen, Styrol und/oder $\alpha$-Methylstyrol.

Ebenfalls besonders bevorzugt werden Mehrstufen-Polyvinylesterdispersionen enthaltend ein durch mehrstufige Copolymerisation erzeugtes Polymer mit Struktureinheiten eingesetzt, die sich von Vinylestern von geradkettigen oder verzweigten $C_1$-$C_{18}$-Carbonsäuren ableiten, vorzugsweise von Vinylacetat und gegebenenfalls von weiteren Vinylestern von verzweigten und gesättigten $C_5$-$C_{12}$-Carbonsäuren und/oder von $\alpha$-Olefinen, ganz besonders bevorzugt von Vinylacetat und Ethylen.

Ganz besonders bevorzugt werden Mehrstufen-Polyvinylesterdispersionen enthaltend ein oder mehrere durch mehrstufige Copolymerisation erzeugte Polymere mit Struktureinheiten eingesetzt, die sich von Vinylacetat und Ethylen ableiten, sowie von Acrylat und/oder Methacrylat und/oder Vinylester einer verzweigten und gesättigten $C_5$-$C_{12}$-Carbonsäure abgeleitete Struktureinheiten.

Ebenfalls ganz besonders bevorzugt werden Mehrstufen-Polyvinylesterdispersionen enthaltend ein oder mehrere durch mehrstufige Copolymerisation erzeugte Polymere mit Struktureinheiten eingesetzt, die sich von mindestens einem Vinylester einer verzweigten und gesättigten $C_1$-$C_{18}$-Carbonsäure ableiten sowie von mindestens einem Vinylaromaten.

Ebenfalls ganz besonders bevorzugt werden Mehrstufen-Polyvinylesterdispersionen enthaltend ein oder mehrere durch mehrstufige Copolymerisation erzeugte Polymere mit Struktureinheiten eingesetzt, die sich ableiten von mindestens einem Monomeren ausgewählt aus der Gruppe der ethylenisch ungesättigten Silangruppen enthaltenden Monomeren, der ethylenisch ungesättigten Epoxidgruppen enthaltenden Monomeren, der ethylenisch ungesättigten Carbonsäure-, Sulfonsäure-Phosphorsäure- oder Phosphonsäuregruppen enthaltenden Monomeren oder deren Salzen, oder der Gemische von mindestens zwei dieser Monomeren.

Die erfindungsgemäß eingesetzten Mehrstufen-Polyvinylesterdispersionen enthalten mindestens ein Schutzkolloid und/oder enthalten mindestens einen Emulgator. Vorzugsweise sind nur Schutzkolloid oder Schutzkolloid und bis zu 3,65 Gew. % an Emulgator enthalten.

Als Schutzkolloid, also als polymerer Stabilisator, eignen sich Methylcellulosen, Hydroxyethyl- und Propylcellulosen sowie Natriumcarboxymethylcellulose, Gelatine, Kasein, Stärke, Gummi arabicum, Hydroxyethylstärke und Natriumalginat.

Das bevorzugte Schutzkolloid ist Polyvinylalkohol. Geeigneter Polyvinylalkohol besitzt Hydrolysegrade von 60 bis 100 mol-% und Viskositäten der 4 %igen wässrigen Lösungen bei 20 °C von 2 - 70 mPa*s, insbesondere 30 bis 70 mPa*s.

Die genannten Schutzkolloide können selbstverständlich auch in Form von Gemischen verwendet werden.

Werden Schutzkolloide eingesetzt, so beträgt deren Menge, bezogen auf die Gesamtmenge der eingesetzten Monomeren, typischerweise 0,1 bis 5 Gewichtsteile, vorzugsweise 0,3 bis 5 Gewichtsteile.

In einer bevorzugten Variante enthalten die erfindungsgemäßen Beschichtungsmittel überhaupt kein Schutzkolloid oder die Menge an Schutzkolloid, bezogen auf die Gesamtmenge der eingesetzten Monomeren, beträgt weniger als 1 Gew. %, besonders bevorzugt weniger als 0,7 Gew. %.

Als Emulgatoren werden in der Regel nichtionische Emulgatoren oder Kombinationen von nichtionischen mit ionischen Emulgatoren eingesetzt.

Beispiele für nichtionische Emulgatoren sind Acyl-, Alkyl-, Oleyl- und Alkylaryloxethylate. Diese Produkte sind beispielsweise im Handel unter der Bezeichnung Genapol® oder Lutensol® erhältlich. Hierunter fallen beispielsweise ethoxilierte Mono-, Di- und Tri-Alkylphenole (EO-Grad: 3 bis 50, Alkylsubstituentenrest: $C_4$ bis $C_{12}$) sowie ethoxilierte Fettalkohole (EO-Grad: 3 bis 80; Alkylrest: $C_8$ bis $C_{36}$), speziell $C_{12}$-$C_{14}$-Fettalkohol(3-8)ethoxilate, $C_{13}$-$C_{15}$-Oxoalkohol (3-30)ethoxilate, $C_{16}$-$C_{18}$-Fettalkohol(11-80)ethoxilate, $C_{10}$-Oxoalkohol(3-11)ethoxilate, $C_{13}$-Oxoalkohol(3-20)ethoxilate, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, die Polyethylenoxid(4-20)-Ether von Oleylalkohol sowie die Polyethenoxid(4-20)-Ether von Nonylphenol. Besonders geeignet sind die Polyethylenoxid(4-20)-Ether von Fettalkoholen, insbesondere von Oleylalkohol.

Werden nichtionische Emulgatoren eingesetzt, so beträgt deren Menge, bezogen auf die Gesamtmenge der eingesetzten Monomeren, typischerweise 0,05 bis 10 Gewichtsteile, vorzugsweise 0,05 bis 5,0 Gewichtsteile besonders bevorzugt 0,05 bis 3,65 Gewichtsteile und ganz besonders bevorzugt 0,1 bis 1 Gewichtsteile. Es lassen sich auch Gemische von nichtionischen Emulgatoren einsetzen.

Anstelle von oder zusätzlich zu nichtionischen Emulgatoren können ionische Emulgatoren, vorzugsweise anionische Emulgatoren verwendet werden. Beispielhaft genannt seien Natrium-, Kalium- und Ammoniumsalze von geradkettigen aliphatischen Carbonsäuren der Kettenlänge $C_{12}$-$C_{20}$, Natriumhydroxyoctadecansulfonat, Natrium-, Kalium-

und Ammoniumsalze von Hydroxyfettsäuren der Kettenlänge $C_{12}$-$C_{20}$ und deren Sulfierungs- und/oder Acetylierungsprodukte, Alkylsulfate, auch als Triethanolaminsalze, Alkyl-($C_{10}$-$C_{20}$)-sulfonate, Alkyl($C_{10}$-$C_{20}$)-arylsulfonate Dimethyl-dialkyl($C_8$-$C_{18}$)-ammoniumchlorid, und ihre Sulfierungsprodukte, Alkalisalze der Sulfobernsteinsäureester mit aliphatischen gesättigten einwertigen Alkoholen der Kettenlänge $C_4$-$C_{16}$, Sulfobernsteinsäure-4-Ester mit Polyethylen-glykolethern von einwertigen aliphatischen Alkoholen der Kettenlänge $C_{10}$-$C_{12}$ (Di-Natriumsalz), Sulfobernstein-säure-4-Ester mit Polyethylenglykolnonylphenylether (Di-Natriumsalz), Sulfobernsteinsäure-bis-cyclohexylester (Natriumsalz), Ligninsulfonsäure sowie deren Calcium-, Magnesium-, Natrium- und Ammoniumsalze, Harzsäuren, hydrierte und dehydrierte Harzsäuren sowie deren Alkalisalze, dodecyliertes Diphenylether-disulfonsaures Natrium sowie Natriumlaurylsulfat, oder ethoxyliertes Natriumlauryl-ethersulfat (EO-Grad 3). Es lassen sich auch Gemische von ionischen Emulgatoren einsetzen.

Werden ionische Emulgatoren eingesetzt, so beträgt deren Menge, bezogen auf die die Gesamtmenge der eingesetzten Monomeren, typischerweise 0,05 bis 10 Gewichtsteile, vorzugsweise 0,05 bis 5,0 Gewichtsteile besonders bevorzugt 0,05 bis 3,65 Gewichtsteile und ganz besonders bevorzugt 0,1 bis 1 Gewichtsteile. Es lassen sich auch Gemische von ionischen Emulgatoren einsetzen.

Bei der Verwendung von Emulgatoren beträgt deren Gesamtmenge, bezogen auf die Gesamtmenge der eingesetzten Monomeren, typischerweise 0,05 bis 10 Gewichtsteile, vorzugsweise 0,05 bis 5,0 Gewichtsteile besonders bevorzugt 0,05 bis 3,65 Gewichtsteile und ganz besonders bevorzugt 0,1 bis 1 Gewichtsteile.

Die erfindungsgemäß eingesetzten wässrigen Mehrstufen-Polyvinylesterdispersionen besitzen typischerweise Feststoffgehalte von 20 bis 70 Gew.-%, vorzugsweise 30 bis 65 Gew.-%, und besonders bevorzugt 40 bis 60 Gew.-%.

Der pH-Wert der erfindungsgemäß eingesetzten Mehrstufen-Polyvinylesterdispersionen liegt typischerweise zwischen 2 und 7, vorzugsweise zwischen 2,5 und 6. Die Herstellung der erfindungsgemäß eingesetzten Mehrstufen-Polyvinylesterdispersionen kann nach dem oben beschriebenen Verfahren erfolgen.

Dabei handelt es sich um eine radikalische Emulsionspolymerisation, die durch einen ausgewählten Schritt ii) modifiziert wurde.

Die radikalische Emulsionspolymerisation in Schritt i) kann in an sich bekannter Weise im Batchverfahren, im Zulaufverfahren, im kombinierten Batch/Zulauf-Verfahren oder im kontinuierlichen Verfahren durchgeführt werden.

Vorzugsweise wird bei Schritt i) im kombinierten Batch/Zulauf-Verfahren oder besonders bevorzugt im Zulaufverfahren gearbeitet, wobei üblicherweise ein Teil der in Schritt i) eingesetzten Monomeren, beispielsweise 1 bis 15 Gew. %, zum Starten der Polymerisation vorgelegt werden. Die Dosierung der Monomere kann entweder zusammen oder in getrennten Zuläufen erfolgen. Weiterhin kann es vorteilhaft sein, in bestimmten Ausführungsformen zur Einstellung spezifischer Partikelgrößen- und -verteilungen zu Beginn von Schritt i) eine Saatpolymerisation durchzuführen.

Der zur Stabilisierung mitverwendete Emulgator und/oder das Schutzkolloid kann entweder zu Beginn von Schritt i) komplett vorgelegt werden oder partiell vorgelegt und partiell dosiert werden oder komplett während der Durchführung von Schritt i) zudosiert werden.

Die Polymerisationstemperatur während Schritt i) bewegt sich typischerweise im Bereich von 20 bis 120°C, vorzugsweise im Bereich von 30 bis 110°C und ganz besonders bevorzugt im Bereich von 45 bis 95°C.

Zum Starten der Polymerisation können die an sich bekannten Starter der radikalischen Polymerisation eingesetzt werden. Beispiele dafür sind Wasserstoffperoxid, Benzoylperoxid, Cyclohexanonperoxid, Isopropylcumylhydroperoxid, Persulfate des Kaliums, Natriums und Ammoniums, Peroxide von geradzahligen gesättigten einwertigen ali-phatischen Carbonsäuren der Kettenlänge $C_8$-$C_{12}$, Tertiärbutyl-hydroperoxid, Ditertiärbutylperoxid, Diisopropylpercar-bonat, Azoisobuttersäuredinitril, Acetylcyclohexansulfonylperoxid, Tertiärbutylperbenzoat, Tertiärbutylperoctoat, Bis-(3,5,5-trimethyl)-hexanoylperoxid, Tertiärbutylperpivalat, Hydroperoxypinan, p-Menthanhydroperoxid. Die vorgenannten Verbindungen können auch innerhalb eines Redoxsysteme verwendet werden, wobei Übergangsmetallsalze, wie Eisen-II-salze, oder andere Reduktionsmittel mitverwendet werden. Als Reduktionsmittel oder Regler können Alkalisalze der Oxymethansulfinsäure, Mercaptane der Kettenlänge $C_{10}$-$C_{14}$, Buten-(l)-ol-(3), Hydroxylaminsalze, Natriumdialkyldithiocarbamat, Natriumbisulfit, Ammoniumbisulfit, Natriumdithionit, Düsopropylxanthogendisulfid, Ascorbinsäure, Weinsäure, Isoascorbinsäure, Borsäure, Harnstoff und Ameisensäure mitverwendet werden.

Vorzugsweise werden jedoch wasserlösliche Persulfate, insbesondere Ammoniumpersulfat oder Natriumpersulfat zum Starten der Polymerisation verwendet.

Der in Schritt i) eingesetzte Starter für die Polymerisation kann entweder zu Beginn von Schritt i) komplett dem Reaktionsansatz zugesetzt werden oder partiell zugesetzt werden und partiell im Verlauf von Schritt i) dosiert werden oder komplett während der Durchführung von Schritt i) zudosiert werden.

Nach der vollständigen oder nahezu vollständigen Umsetzung von mindestens 90 %, vorzugsweise mindestens 95 % der in Schritt i) eingesetzten Monomeren wird Schritt ii) eingeleitet.

Dazu wird die Gesamtmenge der für die nächste Stufe des Polymerisationsverfahrens vorgesehenen Monomeren in reiner Form, in Form einer Lösung oder in Form einer Monomeremulsion zu dem in Schritt i) erhaltenen Polymerisationsgemisch gegeben. Auch in diesem Schritt kann die Dosierung der Monomere entweder zusammen oder in getrennten Zuläufen erfolgen. Die Zeitdauer für die Zugabe bewegt sich typischerweise im Bereich von 5 bis 60 Minuten, vorzugsweise von 15 bis 30 Minuten.

In Schritt ii) kann weiterer Emulgator und/oder weiteres Schutzkolloid entweder zu Beginn von Schritt ii) komplett vorgelegt werden oder während Schritt ii) und gegebenenfalls während Schritt iii) partiell vorgelegt und partiell dosiert werden oder komplett während der Durchführung von Schritten ii) und gegebenenfalls iii) zudosiert werden.

Die Temperatur des Reaktionsansatzes während Schritt ii) kann sich im Bereich der Temperatur am Ende von Schritt i) bewegen, vorzugsweise wird die Temperatur während Schritt ii) gegenüber der Temperatur am Ende von Schritt i) um bis zu 40°C abgesenkt.

Die Monomeren werden dem Reaktionsansatz in Schritt ii) in reiner Form in der Form von Lösungen in organischen Lösungsmitteln oder in Form einer Emulsion, insbesondere einer wässrigen Emulsion, zugefügt. Bevorzugt werden die Monomeren dem Reaktionsansatz in flüssiger und reiner Form zugefügt.

Nach der Zugabe der Monomeren in Schritt ii) wird Schritt iii) durch Zugabe des Initiators eingeleitet. Dieses kann unmittelbar nach Beendigung von Schritt ii) erfolgen oder nach einer Ruhephase von beispielsweise 15 bis 120 Minuten. Es wird angenommen, dass sich die in Schritt ii) zugeführten Monomeren während der Durchführung von Schritt ii) und in der gegebenenfalls sich daran anschließenden Ruhephase in oder an den in der ersten Stufe erzeugten Polymerteilchen verteilen können.

Zum erneuten Starten der Polymerisation in Schritt iii) des Verfahrens können die an sich bekannten Starter der radikalischen Polymerisation eingesetzt werden. Beispiele dafür sind weiter oben bei der Beschreibung des Schrittes i) aufgeführt.

Auch in diesem Falle kann der in Schritt iii) eingesetzte Starter für die Polymerisation entweder zu Beginn von Schritt iii) komplett dem Reaktionsansatz zugesetzt werden oder partiell zugesetzt werden und partiell im Verlauf von Schritt iii) dosiert werden oder komplett während der Durchführung von Schritt iii) zudosiert werden.

Die Polymerisationstemperatur während Schritt iii) bewegt sich typischerweise im Bereich von 20 bis 120°C, vorzugsweise im Bereich von 30 bis 110°C und ganz besonders bevorzugt im Bereich von 45 bis 95°C.

Vor dem Starten der zweiten Stufe der Polymerisation empfiehlt es sich, die Temperatur des Reaktionsansatzes vor oder während der Zugabe des Starters zu erhöhen.

Nach Abschluss von Schritt iii) kann zur Entmonomerisierung eine weitere, vorzugsweise chemische Nachbehandlung, insbesondere mit Redoxkatalysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d.h. destillative Entfernung, insbesondere über Wasserdampfdestillation, oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm) gestattet.

Die hier beschriebenen wässrigen Mehrstufen-Polyvinylesterdispersionen können als Bindemittel für Beschichtungsmittel aller Art eingesetzt werden. Besonders bevorzugt kommen diese als Alleinbindemittel zum Einsatz.

Der Anteil an Mehrstufen-Polyvinylesterdispersion im erfindungsgemäßen Beschichtungsmittel beträgt typischerweise 5 bis 50 Gew.-%, vorzugsweise 10 bis 50 Gew.-%, besonders bevorzugt 15 bis 30 Gew. %, bezogen auf den Gesamtfeststoffgehalt.

Die erfindungsgemäßen Beschichtungsmittel werden beispielsweise als kunstharzgebundene Putze, pastöse Fliesenkleber, pastöse Dichtmassen und pastöse Versiegelungsmassen, vorzugsweise für poröse Bauteile, sowie als Papierstreichmassen insbesondere jedoch als Anstrichmittel, wie z.B. Dispersionsfarben, Dispersionslacke und Lasuren, eingesetzt.

Die oben beschriebenen Beschichtungsmittel enthalten das Bindemittel in der Regel als Alleinbindemittel. Das bedeutet, dass diese Beschichtungsmittel keine oder nur geringe Mengen an hydraulisch abbindenden Materialien aufweisen.

Besonders bevorzugt werden die erfindungsgemäßen Beschichtungsmittel als Dachbeschichtungen, als Fassadenfarben oder als Innenfarben eingesetzt.

Die Erfindung betrifft auch diese Verwendungen.

Die erfindungsgemäßen Beschichtungsmittel können direkt oder nach Zusatz rheologie-modifizierender Additive und/oder weiterer Komponenten als Zubereitungen zur Beschichtung von Substraten eingesetzt werden. Solche Zubereitungen sind beispielsweise Grundierungen oder Klarlacke.

Eine bevorzugte Ausführungsform der Zubereitungen sind Dispersionsfarben. Diese enthalten im allgemeinen 30 bis 75 Gew.-%, vorzugsweise 40 bis 65 Gew.-%, nichtflüchtige Bestandteile. Hierunter sind alle Bestandteile der Dispersionsfarbe außer Wasser und gegebenenfalls anwesende Kohlenwasserstoffe zu verstehen, beispielsweise die Gesamtmenge an festem Bindemittel, Füllstoff, Pigment, Weichmacher, Bindemittel (Feststoffanteil) und polymerem Hilfsmittel.

Von den nichtflüchtigen Bestandteile entfallen dabei vorzugsweise

a) 3 bis 90 Gew.-%, besonders bevorzugt 10 bis 60 Gew.-%, auf die Polyvinylesterdispersion, wobei die Mengenangaben auf den Feststoff bezogen sind

b) 5 bis 85 Gew.-%, besonders bevorzugt 10 bis 60 Gew.-%, auf mindestens ein anorganisches Pigment,

c) 0 bis 85 Gew.-%, besonders bevorzugt 20 bis 70 Gew.-%, auf anorganische Füllstoffe und

d) 0,1 bis 40 Gew.-%, besonders bevorzugt 0,5 bis 15 Gew.-%, auf übliche Hilfsmittel.

Besonders bevorzugt sind lösemittel- und weichmacherfreie, wässrige Beschichtungsmittel.

Die Pigment-Volumen-Konzentration (PVK) von erfindungsgemäßen pigmenthaltigen Beschichtungsmittein liegt im allgemeinen oberhalb von 5 %, vorzugsweise im Bereich von 10 bis 90 %.

Alle dem Fachmann für die genannten Einsatzzwecke bekannten Pigmente können verwendet werden. Bevorzugt sind Titandioxid, vorzugsweise in der Rutilform, Bariumsulfat, Zinkoxid, Zinksulfid, basisches Bleicarbonat, Antimontrioxid und Lithopone (Zinksulfid und Bariumsulfat). Die Beschichtungsmittel können jedoch auch farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Beschichtungsmittel auch organische Farbpigmente, beispielsweise Sepia, Gummigutt, Kasseter Braun, Toluidinrot, Pararot, Hansagelb, Indigo, Azofarbstoffe, Anthrachinoide und Indigoide Farbstoffe sowie Dioxazin, Chinacridon-, Phthalocyanin-, Isolndolinon- und Metallkomplexpigmente enthalten.

Als Füllstoffe können alle dem Fachmann für den genannten Einsatzzweck bekannten Füllstoffe verwendet werden. Bevorzugte Füllstoffe sind Alumosilicate, wie z.B. Feldspate, Silicate, wie z.B. Kaolin, Talkum, Glimmer, China Clay, Magnesit, Erdalkalicarbonate, wie z.B. Calciumcarbonat, beispielsweise in Form von Calcit oder Kreide, Magnesiumcarbonat, Dolomit, Erdalkalisulfate, wie z.B. Calciumsulfat, und Siliciumdioxid. Die Füllstoffe können entweder als Einzelkomponenten oder als Füllstoffmischungen eingesetzt werden. In der Praxis bevorzugt sind Füllstoffmischungen wie z.B. Calciumcarbonat/Kaolin und Calciumcarbonat/Talkum. Kunstharzgebundene Putze können auch gröbere Zuschläge, wie Sände oder Sandsteingranulate, enthalten. In Dispersionsfarben werden im allgemeinen feinteilige Füllstoffe bevorzugt.

Zur Erhöhung der Deckkraft und zur Einsparung von Weißpigmenten werden in Dispersionsfarben häufig vorzugsweise feinteilige Füllstoffe, wie z.B. gefälltes Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan 1,1-diphosphonsaures Natrium sowie Naphthalinsulfonsäuresalze, insbesondere deren Natriumsalze. Als Dispergiermittel können darüber hinaus geeignete Aminoalkohole, wie z.B. 2-Amino-2-methylpropanol, verwendet werden. Die Dispergiermittel bzw. Netzmittel werden vorzugsweise in einer Menge von 0,1 bis 2 Gew.-%, bezogen auf das Gesamtgewicht des Beschichtungsmittels, eingesetzt.

Ferner können die Hilfsmittel auch Verdickungsmittel umfassen, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und (Meth)acrylsäurebasis, wie Acrylsäure/Acrylamid- und (Meth)acrylsäure/Acrylester-Copolymerisate und sog. Assoziatiwerdicker, wie Styrol-Maleinsäureanhydrid-Polymerisate oder vorzugsweise dem Fachmann bekannte hydrophob modifizierte Polyetherurethane, (HEUR), hydrophob modifizierte Acrylsäure-Copolymere (HASE) Polyetherpolyole.

Auch anorganische Verdickungsmittel, wie z.B. Bentonite oder Hectorit, können verwendet werden.

Bei Anwesenheit von Verdickungsmitteln werden diese vorzugsweise in Mengen von 0,1 bis 3 Gew.-%, besonders bevorzugt 0,1 bis 1 Gew.-%, bezogen auf das Gesamtgewicht des Beschichtungsmittels, verwendet.

Auch können die erfindungsgemäßen Beschichtungsmittel vernetzende Zusätze enthalten. Derartige Zusätze können sein: aromatische Ketone, wie z.B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren werden z.B. in der DE-A-38 27 975 und der EP-A-0 417 568 offenbart. Geeignete, vernetzend wirkende Verbindungen sind auch wasserlösliche Verbindungen mit mindestens zwei Aminogruppen, beispielsweise Dihydrazide aliphatischer Dicarbonsäuren, wie sie z.B. in der DE-A-39 01 073 offenbart werden, wenn das Vinylester-Copolymerisat Carbonylgruppen enthaltende Monomere copolymerisiert enthält.

Darüber hinaus können in den erfindungsgemäßen Beschichtungsmitteln als weitere Hilfsmittel auch Wachse auf Basis von Paraffinen und Polyethylen, sowie Mattierungsmittel, Entschäumer, Konservierungs- oder Hydrophobiermittel, UV-Schutzmittel, Biozide, Fasern, Weichmacher sowie weitere dem Fachmann bekannte Additive eingesetzt werden. Beispiele für Weichmacher sind Dimethylphthalat, Disobutylphthalat, Adipinsäuredüsobutylester, Coasol B® und Plastilit 3060®. Beispiele für Entschäumer sind Mineralöl- oder Silikonentschäumer. Beispiele für UV-Schutzmittel sind sterisch gehinderte Piperidinverbindungen (HALS) oder Benzophenoderivate.

Mit den oben beschriebenen Mehrstufen-Polyvinylesterdispersionen können neben lösungsmittel- und weichmacherfreien Beschichtungsmitteln selbstverständlich auch Beschichtungsmittel hergestellt werden, die Lösungsmittel und/oder Weichmacher enthalten. Solche Filmbildehilfsmittel sind dem Fachmann allgemein bekannt und können üblicherweise in Mengen von 0,1 bis 20 Gew.-%, bezogen auf das in der Zubereitung enthaltene Polyvinylesterderivat, eingesetzt werden, so dass die Zubereitung eine Mindestfilmbildetemperatur von weniger als 15°C, vorzugsweise im Bereich von 0 bis 10°C, aufweist. Beispiele dafür sind Testbenzin, Texanol®, TxiB®, Butylglykol, Butyldiglykol, Butyldipropylenglykol und Butyltripropylenglykol.

Die erfindungsgemäßen Beschichtungsmittel sind stabile fluide Systeme, die man zur Beschichtung von einer Vielzahl von Substraten verwenden kann. Geeignete Substrate sind beispielsweise Holz, Beton, Metall, Glas, Keramiken, Plastik, Putze, Tapeten, Papier, gestrichene, grundierte oder verwitterte Untergründe. Das Aufbringen des Beschichtungsmittels auf das zu beschichtende Substrat erfolgt in einem von der Ausgestaltung des Beschichtungsmittels abhängigen Weise. Das Aufbringen kann, abhängig von der Viskosität und dem Pigmentgehalt der Zubereitung sowie dem Substrat mittels Rollen, Bürsten, Rakeln, Tauchen oder als Spray erfolgen.

Die aus den erfindungsgemäßen Beschichtungsmitteln erzeugten Filme zeigen überraschenderweise eine außerordentlich hohe Bewitterungsbeständigkeit, vergleichbar mit Dispersionsfarben enthaltend Bindemittel auf Reinacrylatbasis.

Die nachfolgenden Beispiele dienen der Erläuterung der Erfindung. Die in den Beispielen angegebenen Teile und Prozente beziehen sich auf das Gewicht, soweit nicht anders vermerkt.

Vergleichsbeispiel V1: Herstellung einer Dispersion eines mit Vinylacetat-Ethylen-Copolymeren durch herkömmliche Copolymerisation

In eine Druckapparatur mit Rührer, Mantelheizung und Dosierpumpen wurde eine wässerige Lösung, bestehend aus folgenden Bestandteilen, eingegeben:

21525 g Wasser, 86 g Natriumacetat, 1440 g einer 70 Gew. %-igen wässerigen Lösung eines Oxoalkylethoxylats mit 28 Mol Ethylenoxid, 2167 g einer 10 Gew. %-igen wässerigen Polyvinylalkohollösung (Viskosität der 4 Gew. %-igen wässrigen Lösung 23 mPa* s), 1127 g einer 15 Gew.% -igen Natriumlaurylsulfatlösung, 577 g einer 30 Gew. %-igen wässerigen Natriumvinylsulfonatlösung und 8 g einer 1 Gew. %-igen wässerigen Lösung von Fe-II($SO_4$) x 7 $H_2O$. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1640 g Vinylacetat eindosiert. Es wurde auf 60° C Innentemperatur erhitzt. Bei 35°C wurden 10% einer Lösung aus 30 g Brüggolit C in 2215 g Wasser eindosiert. Anschließend wurden 10% einer Lösung aus 42,8 g 70 Gew.%-igen wässerigen t-Butylhydroperoxid in 2215 g Wasser zudosiert wobei die Innentemperatur auf 60° C anstieg und es wurde zur Abführung der Reaktionswärme gekühlt. Eine Mischung aus 31065 g Vinylacetat und 72 g Vinyltrimethoxysilan (VTM) wurden zudosiert, wobei der Ethylendruck auf 40 bar gehalten wurde bis 1725 g Ethylen im Reaktor waren. Gleichzeitig wurden die restlichen 90 % der Reduktions- und Initiatorlösung bei 60°C Innentemperatur zudosiert.

Danach wurde eine Lösung aus 36 g Natriumperoxodisulfat in 600 g Wasser zudosiert und die Innentemperatur auf 80°C erhöht und 1 Stunde bei dieser Temperatur gehalten.

Beispiel 1: Herstellung einer Dispersion eines mit Methylmethacrylat modifizierten Vinylacetat-Ethylen-Copolymeren durch Einschlusspolymerisation (5 GT MMA)

In eine Druckapparatur mit Rührer, Mantelheizung und Dosierpumpen wurde eine wässerige Lösung, bestehend aus folgenden Bestandteilen, eingegeben:

Wassermenge A (20200 g) Wasser, 74 g Natriumacetat, 1240 g einer 70 Gew. %-igen wässerigen Lösung eines Oxoalkylethoxylats mit 28 Mol Ethylenoxid, 1860 g einer 10 Gew. %-igen wässerigen Polyvinylalkohollösung (Viskosität der 4 Gew. %-igen wässerigen Lösung 23 mPa*s), 970 g einer 15 Gew. %-igen Natriumlaurylsulfatlösung, 500 g einer 30 Gew. %-igen wässerigen Natriumvinylsulfonatlösung und 7 g einer 1 Gew. %-igen wässerigen Lösung von Fe-II($SO_4$) $\times$ 7 $H_2O$. Der pH-Wert der Lösung betrug 7,2. Die Apparatur wurde von Luftsauerstoff befreit und es wurde Ethylen in die Apparatur gedrückt bis 20 bar Ethylendruck. Dann wurden 1390 g Vinylacetat eindosiert. Es wurde auf 60° C Innentemperatur erhitzt. Bei 35°C wurden 10% einer Lösung aus 26 g Brüggolit C in 1900 g Wasser eindosiert. Anschließend wurden 10% einer Lösung aus 37 g 70 Gew.%-igen wässerigen t-Butylhydroperoxid in 1900 g Wasser zudosiert wobei die Innentemperatur auf 60° C anstieg und es wurde zur Abführung der Reaktionswärme gekühlt. Eine Mischung aus 26740 g Vinylacetat und 62 g Vinyltrimethoxysilan (VTM) wurden zudosiert, wobei der Ethylendruck auf 40 bar gehalten wurde bis 1483 g Ethylen im Reaktor waren. Gleichzeitig wurden die restlichen 90 % der Reduktions- und Initiatorlösung bei 60°C Innentemperatur zudosiert.

Danach wurde die Innentemperatur auf 80°C erhöht und 1 Stunde bei dieser Temperatur gehalten. Anschließend wurde auf 50°C abgekühlt, Methylmethacrylatmenge B (1480 g) zudosiert und die Innentemperatur eine weitere Stunde bei 50°C gehalten. Es wurde nun auf 85°C Innentemperatur erhitzt und eine Lösung aus 14,8 g Natriumperoxodisulfat in 590 g Wasser eindosiert. Die Innentemperatur wurde eine weitere Stunde bei 85°C gehalten und dann abgekühlt.

Nach dieser Herstellvorschrift wurden drei weitere Beispieldispersionen 2, 3 und 4 mit folgenden Wassermengen A und Methylmethacrylatmengen B gemäß der nachfolgenden Tabelle 1 hergestellt. Einige Eigenschaften der Dispersionen der Beispiele V1 und 1-4 sind in der Tabelle 2 dargestellt.

Tabelle 1

|  | Wassermenge A | Methylmethacrylatmenge B |
|---|---|---|
| Beispiel 2, 10 GT MMA | 21400 g | 2970 g |
| Beispiel 3, 15 GT MMA | 22700 g | 4450 g |
| Beispiel 4, 20 GT MMA | 23900 g | 5930 g |

Tabelle 2

| Beispiel Nr. | Feststoffgehalt (%) | MFT (°C) | $T_g$ (°C) | Siebrückstand (%) | Aerosol $d_w$[1] (nm) | Aerosol $d_w/d_n$[2] | pH-Wert | Kontaktwinkel[3] |
|---|---|---|---|---|---|---|---|---|
| VB1 | 54,2 | 11,0 | 29,0 | 0,012 | 173 | 1,34 | 4,5 | 33 |
| 1 | 53, 5 | 9,0 | 30,4 | 0,007 | 185 | 1,38 | 4,3 | 36 |
| 2 | 53,2 | 11,0 | 29,6 | 0,0056 | 196 | 1,43 | 4,2 | 39 |
| 3 | 53,5 | 12,0 | 32,2 | 0,0062 | 192 | 1,41 | 4,2 | 40 |
| 4 | 53,4 | 13,0 | 33,0 | 0,0034 | 198 | 1,36 | 4,2 | 42 |

[1] Gewichtsmittel des Teilchendurchmessers (ermittelt durch Aerosolspektroskopie)
[2] Verhältnis von Gewichts- zu Zahlenmittel des Teilchendurchmessers (ermittelt durch Aerosolspektroskopie)
[3] Kontaktwinkel des aus der Dispersion erzeugten Films gegenüber Wasser

<u>Vergleichsbeispiel V2</u>: Herstellung einer Vinylacetat / Ethylen-Copolymerisatdispersion durch herkömmliche Mehrstufenpolymerisation

In eine Druckapparatur mit Rührer, Mantelheizung und Dosierpumpen wurde eine wässrige Lösung, bestehend aus folgenden Bestandteilen, eingegeben:

18813 g Wasser, 84,2 g Natriumacetat, 5033 g einer 20 Gew. %igen wässrigen Lösung eines Nonylphenolethoxylats mit 30 Mol Ethylenoxid, 67,1 g Natriumlaurylsulfat, 2013 g einer 10 Gew. %-igen wässrigen Polyvinylalkohollösung (Viskosität der 4 Gew.-%igen wässrigen Lösung 23 mPa*s), 566 g einer 30 Gew. %-igen wässrigen Natriumvinylsulfonatlösung und 33 g einer 1 Gew. %-igen wässrigen Lösung von Fe-II(SO$_4$) $\times$ 7 H$_2$O. Der pH-Wert der Lösung betrug 7,2. Die Apparatur wurde von Luftsauerstoff befreit und es wurden 335 g Ethylen in die Apparatur gedrückt und die Ethylenzufuhr geschlossen. Bei Raumtemperatur wurde 30 % Monomermischung B und 2,63 g Brüggolit E01 in 194 g Wasser gelöst zudosiert. Es wurde auf 60° C Innentemperatur erhitzt und bei 50°C eine Lösung aus 3,75 g 70%iger wässriger tert.-Butylhydroperoxid-Lösung in 194 g Wasser eindosiert. Es wurde zur Abführung der Reaktionswärme gekühlt. Bei Erreichen von 60°C wurde in 90 Minuten 70% Monomermischung B zudosiert sowie 26,6 g Brüggolit E01 in 1964 g Wasser gelöst innerhalb 360 Minuten und eine Lösung aus 38 g 70%iger wässriger tert.-Butylhydroperoxid-Lösung in 1964 g Wasser innerhalb 360 Minuten. Nach Dosierende von Monomermischung B wurde die Monomermischung A in 270 Minuten zudosiert und durch Öffnen der Ethylenzufuhr der Kesselinnendruck auf 40 bar erhöht, wobei die Ethylenzufuhr bei diesem Druck soweit geöffnet blieb bis weitere 3020 g Ethylen eindosiert waren. Nach Dosierende Monomermischung A wurde eine Lösung aus 33,6 g Natriumpersulfat in 792 g Wasser zudosiert und die Innentemperatur auf 80° C erhöht und 1 Stunde bei dieser Temperatur gehalten. Unter Rühren wurde anschließend der Großteil des nicht umgesetzten Ethylens ausgegast und es wurden 2 l Wasser zugegeben. Dann wurden unter Anlegen von Vakuum innerhalb von 2 Stunden 2 l Wasser abdestilliert, wodurch der Restvinylacetatgehalt der Dispersion auf 0,05 Gew. %, bezogen auf die Dispersion, reduziert wurde.

Als Monomermischung B wurden 9681 g Vinylacetat und 134,2 g Vinyltrimethoxysilan eingesetzt.

Als Monomermischung A wurden 20385 g Vinylacetat eingesetzt.

Beispiel 5: Herstellung einer Dispersionen eines mit Methylmethacrylat modifizierten Vinylacetat-Ethylen-Copolymeren durch Einschlusspolymerisation (5 GT MMA):

In eine Druckapparatur mit Rührer, Mantelheizung und Dosierpumpen wurde eine wässrige Lösung, bestehend aus folgenden Bestandteilen, eingegeben:

Wassermenge A (17700 g), 74,5 g Natriumacetat, 4450 g einer 20 Gew. %igen wässrigen Lösung eines Nonylphenolethoxylats mit 30 Mol Ethylenoxid, 60 g Natriumlaurylsulfat, 1780 g einer 10 Gew. %-igen wässrigen Polyvinylalkohollösung (Viskosität der 4 Gew.-%igen wässrigen Lösung 23 mPa*s), 500 g einer 30 Gew. %-igen wässrigen Natriumvinyl-sulfonatlösung und 30 g einer 1 Gew. %-igen wässrigen Lösung von Fe-II(SO4) $\times$ 7 H2O. Der pH-Wert der Lösung betrug 7,2. Die Apparatur wurde von Luftsauerstoff befreit und es wurden 300 g Ethylen in die Apparatur gedrückt und die Ethylenzufuhr geschlossen. Bei Raumtemperatur wurde 30 % einer Monomermischung bestehend aus 8570 g Vinylacetat und 119 g Vinyltrimethoxysilan, dann 2,3 g Brüggolit E01 in 172 g Wasser gelöst zudosiert. Es wurde auf 60° C Innentemperatur erhitzt und bei 50°C eine Lösung aus 3,3 g 70%iger wässriger tert.-Butylhydroperoxid-Lösung in 172 g Wasser eindosiert. Es wurde zur Abführung der Reaktionswärme gekühlt. Bei Erreichen von 60°C wurde in 90 Minuten die restlichen 70% der Monomermischung zudosiert sowie 23,5 g Brüggolit E01 in 1737 g Wasser gelöst innerhalb 360 Minuten und eine Lösung aus 33,6 g 70%iger wässriger tert.-Butylhydroperoxid-Lösung in 1737 g Wasser innerhalb 360 Minuten. Nach Dosierende der Monomermischung wurden 18040 g Vina in 270 Minuten zudosiert und gleichzeitig durch Öffnen der Ethylenzufuhr der Kesselinnendruck auf 40 bar erhöht, wobei die Ethylenzufuhr bei diesem Druck soweit geöffnet blieb bis weitere 2670 g Ethylen eindosiert waren. Danach wurde die Innentemperatur auf 80°C erhöht und 1 Stunde bei dieser Temperatur gehalten. Anschließend wurde auf 50°C abgekühlt, dann Methylmethacrylatmenge B (1480 g) zudosiert und die Innentemperatur eine weitere Stunde bei 50°C gehalten. Es wurde nun auf 85°C Innentemperatur erhitzt und eine Lösung aus 14,8 g Natriumperoxodisulfat in 590 g Wasser eindosiert. Die Innentemperatur wurde eine weitere Stunde bei 85°C gehalten und dann abgekühlt.

Nach dieser Herstellvorschrift wurden drei weitere Beispieldispersionen 6, 7 und 8 mit folgenden Wassermengen A und Methylmethacrylatmengen B gemäß der nachfolgenden Tabelle 3 hergestellt. Einige Eigenschaften der Dispersionen der Beispiele V2 und 5-8 sind in der Tabelle 4 dargestellt.

Tabelle 3

|  | Wassermenge A | Methylmethacrylatmenge B |
|---|---|---|
| Beispiel 6, 10 GT MMA | 19000 g | 2970 g |
| Beispiel 7, 15 GT MMA | 20200 g | 4450 g |
| Beispiel 8, 20 GT MMA | 21500 g | 5930 g |

Tabelle 4

| Beispiel Nr. | Feststoffgehalt (%) | MFT (°C) | $T_g$ (°C) | Siebrückstand (%) | Aerosol $d_w$ [1] (nm) | Aerosol $d_w/d_n$ [2] | PCS $d_w$ [3] (nm) | PCS $d_w/d_n$ [4] |
|---|---|---|---|---|---|---|---|---|
| VB2 | 53, 7 | 4 | 24,7 | 0,0067 | 178 | 1, 35 | 480 | 1,17 |
| 5 | 53,5 | 6 | 24,6 | 0,0111 | 186 | 1,38 | 452 | 1,14 |
| 6 | 53,5 | 7 | 25,7 | 0,0091 | 183 | 1,37 | 748 | 1,3 |
| 7 | 53,2 | 7 | 26,1 | 0,0075 | 186 | 1,38 | 536 | 1,16 |
| 8 | 53,3 | 9 | 26,6 | 0,0109 | 189 | 1,39 | 1829 | 1,91 |

[1] Gewichtsmittel des Teilchendurchmessers (ermittelt durch Aerosolspektroskopie)
[2] Verhältnis von Gewichts- zu Zahlenmittel des Teilchendurchmessers (ermittelt durch Aerosolspektroskopie)
[3] Gewichtsmittel des Teilchendurchmessers (ermittelt durch Photo-Korrelations-Spektroskopie)
[4] Verhältnis von Gewichts- zu Zahlenmittel des Teilchendurchmessers (ermittelt durch Photo-Korrelations-Spektroskopie)

Vergleichsbeispiel 3: Kommerziell erhältliche Dispersion auf Basis von Polyacrylat. LDM 7717, Celanese Emulsions GmbH

Freibewitterunqsversuche mit Dispersionsfarben

Die Erfindung wird nachfolgend durch Formulierung und Untersuchung von Dispersionsfarben mit der Zusammensetzung gemäß folgenden Tabellen 5 und 6 näher beschrieben.

Tabelle 5

| Bestandteile | Gewichtsteile |
|---|---|
| Wasser | 174,0 |
| Verdicker, Tylose MH 4000 KG4 | 2,0 |
| Dispergiermittel, Calgon N | 15,0 |
| Dispergiermittel, Mowiplus XW 330 ca. 30 %-ig | 3,0 |
| Entschäumer auf Mineralölbasis | 4,0 |
| Pigment Titandioxid | 225,0 |
| Füllstoff Talk | 40,0 |
| Füllstoff, China Clay Grade B | 20,0 |
| Füllstoff, Omyacarb 5 GU | 195,0 |
| Ammoniak, 20 %-ige wässr. Lösung | 2,0 |
| Copolymerisatdispersion[1) | 302,0 |
| Filmbildehilfsmittel, Butyldiglykolacetat | 8,0 |
| Filmbildehilfsmittel, Dowanol DPnB | 10,0 |
| Summe | 1000,0 |
| [1) Die verwendeten Dispersionen sind in der folgenden Tabelle 6 aufgeführt | |

Der pulverförmige Verdicker wurde in das Wasser eingestreut und unter Rühren gelöst, dann wurden Dispergiermittel und Entschäumer auf Mineralölbasis unter Rühren zugegeben. Unter Rühren mittels eines Dissolvers wurden die Pigmente und Füllstoffe eindispergiert und dann unter Steigerung der Rührgeschwindigkeit auf 5000 U/Min weiter bei 5000 U/Min. dispergiert, wobei die Temperatur der Pigment/Füllstoffpaste auf 60° C anstieg. Man ließ auf 30° C abkühlen. Bei geringer Rührung wurden nun die Copolymerisatdispersion und die Filmbildehilfsmittel eingerührt.
Die Herstellung der Prüfkörper für die Freibewitterung erfolgte folgendermaßen: Als Substrat wurden Faserzementplatten (20 x 50 cm, vorbewittert) eingesetzt. Die Vorbewitterung erfolgte durch vierfache je 16-stündige Wasserlagerung mit Zwischentrocknung und Reinigung. Die Faserzementplatten wurden grundiert und die Dispersionsfarbe wurde im Labor bei Raumtemperatur je zwei Mal auf das Substrat aufgetragen. Dabei wurde jeweils 8 Stunden zwischengetrocknet.
Zur Bewitterungsprüfung wurden die Prüfkörper nach 48 Stunden Trocknung im Labor in der Freibewitterung unter einem Winkel von 90° Südrichtung in Istanbul ausgelegt. Zur Beurteilung der Bewitterungsstabilität wurden die Farbtonbeständigkeit herangezogen. Dazu wurden die L-, a- und b-Werte nach DIN 6174 mit einem Spektralphotometer colorguide (Fa. ByK-Gardner) bestimmt.

Tabelle 6

| Copolymerisatdispersion gemäß | L-Start | L-9-Monate | Delta-L-9-Monate | L-12-Monate | Delta-L-12-Monate |
|---|---|---|---|---|---|
| Vergleichsbeispiel 1 | 96,26 | 90,46 | 5,8 | 89,1 | 7,16 |
| Beispiel 2 | 96,29 | 92,03 | 4,26 | 90,45 | 5,84 |
| Beispiel 4 | 96,36 | 92,16 | 4,2 | 90, 9 | 5,46 |

(fortgesetzt)

| Copolymerisatdispersion gemäß | L-Start | L-9-Monate | Delta-L-9-Monate | L-12-Monate | Delta-L-12-Monate |
|---|---|---|---|---|---|
| Vergleichsbeispiel 2 | 96,25 | 91,14 | 5,11 1 | 89,7 | 6,55 |
| Beispiel 6 | 96,44 | 92, 3 | 4,14 | 90,92 | 5,52 |
| Beispiel 8 | 96,26 | 92,92 | 3,34 | 91,96 | 4,3 |
| Vergleichsbeispiel 3 | 96,35 | 92,34 | 4,01 | 91,02 | 5,33 |

In Tabelle 6 sind die L-Werte nach 9 bzw. 12 Monaten Freibewitterung dargestellt. Ferner wurde der Delta-L-Wert angegebenen. Dieser errechnet sich als Differenz des L-Wertes nach Freibewitterung und des Nullwertes (Startwert). Je kleiner die Delta-L-Werte ausfallen, umso geringer ist die Helligkeitsänderung im Vergleich zum Startwert und somit umso höher ist die Bewitterungsbeständigkeit.

**Patentansprüche**

1. Beschichtungsmittel enthaltend Pigmente und/oder Füllstoffe sowie eine Mehrstufen-Polyvinylesterdispersion, die erhältlich ist durch

   i) Polymerisation von mindestens einem Vinylester einer gesättigten Carbonsäure und gegebenenfalls weiteren damit copolymerisierbaren Monomeren in Gegenwart von mindestens einem Emulgator und/oder mindestens einem Schutzkolloid bis zu einem Umsatz von mindestens 90 % der eingesetzten Monomeren,
   ii) Zugabe von mindestens einem sich von dem in Schritt i) eingesetzten Vinylester unterscheidenden radikalisch polymerisierbaren Monomer in reiner Form, in Form einer Lösung oder in Form einer Emulsion zum in Schritt i) erhaltenen Polymerisationsgemisch, und
   iii) Zugabe von mindestens einem Initiator der radikalischen Polymerisation nach Beendigung der Zugabe des oder der Monomeren in Schritt ii), und Polymerisation der in Schritt ii) zugesetzten Monomeren in Gegenwart der in Schritt i) erzeugten Dispersion, wobei
   iv)

   a) in Schritt i) und/oder in Schritt ii) mindestens ein ethylenisch ungesättigte Silangruppen enthaltendes Monomer und/oder mindestens eine ethylenisch ungesättigte Epoxidverbindung zum Einsatz kommt, oder wobei
   b) der Gehalt an Schutzkolloid, bezogen auf den Gesamtmonomergehalt, 0 bis weniger als 1 Gew. % beträgt.

2. Beschichtungsmittel nach Anspruch 1, **dadurch gekennzeichnet, dass** die Mehrstufen-Polyvinylesterdispersion einen Siebrückstand, bezogen auf die Mehrstufen-Polyvinylesterdispersion und gemessen mit einem 40 μm Sieb, von weniger als 0,05 Gew. % aufweist.

3. Beschichtungsmittel nach einem der Ansprüche 1 oder 2, **dadurch gekennzeichnet, dass** die Mehrstufen-Polyvinylesterdispersion einen Gehalt an Emulgatoren von bis zu 5 Gew. % aufweist, bezogen auf die Gesamtmasse an eingesetzten Monomeren.

4. Beschichtungsmittel nach Anspruch 3, **dadurch gekennzeichnet, dass** die Mehrstufen-Polyvinylesterdispersion einen Gehalt an Emulgatoren von weniger als 3,65 Gew. % aufweist, bezogen auf die Gesamtmasse an eingesetzten Monomeren.

5. Beschichtungsmittel nach Anspruch 1, **dadurch gekennzeichnet, dass** die Mehrstufen-Polyvinylesterdispersion keine oder bis zu 1 Gew. % Emulgatoren enthält und zusätzlich durch weniger als 1 Gew. %, bezogen auf den Gesamtmonomergehalt, an Schutzkolloid stabilisiert ist.

6. Beschichtungsmittel nach einem der Ansprüche 1 bis 5, **dadurch gekennzeichnet, dass** der Gehalt an einpolymerisierten Säuren und/oder Säureanhydriden in der Mehrstufen-Polyvinylesterdispersion 6 Gew. %, bezogen auf die Gesamtmonomermenge, nicht übersteigt.

**EP 2 017 313 B1**

7. Beschichtungsmittel nach einem der Ansprüche 1 bis 6, **dadurch gekennzeichnet, dass** der Polyvinylester Struktureinheiten enthält, die sich ableiten von Vinylacetat und gegebenenfalls von weiteren Vinylestern von verzweigten und gesättigten $C_5$-$C_{12}$-Carbonsäuren und/oder von $\alpha$-Olefinen.

8. Beschichtungsmittel nach Anspruch 7, **dadurch gekennzeichnet, dass** der Polyvinylester Struktureinheiten enthält, die sich von Ethylen ableiten.

9. Beschichtungsmittel nach Anspruch 7, **dadurch gekennzeichnet, dass** der Polyvinylester Struktureinheiten enthält, die sich ableiten von Acrylat und/oder Methacrylat und/oder von Vinylester einer verzweigten und gesättigten $C_5$-$C_{12}$-Carbonsäure.

10. Beschichtungsmittel nach einem der Ansprüche 1 bis 9, **dadurch gekennzeichnet, dass** die Mehrstufen-Polyvinylesterdispersion erhältlich ist durch Zugabe von ein oder mehreren Monomeren in Schritt ii), die ausgewählt sind aus der Gruppe der Vinylester von $C_5$-$C_{18}$-Carbonsäuren, der Acrylate, der Methacrylate, der Acrylamide, der Methacrylamide, der Bisester der Maleinsäure mit $C_1$-$C_{18}$-Alkoholen, der Biester der Fumarsäure mit $C_1$-$C_{18}$-Alkoholen und/oder der Vinylaromaten.

11. Beschichtungsmittel nach einem der Ansprüche 1 bis 10, **dadurch gekennzeichnet, dass** die Mehrstufen-Polyvinylesterdispersion erhältlich ist durch Zugabe von einer Kombination von Vinylacetat und Ethylen in Schritt i) und durch, Zugabe von mindestens einem Acrylat und/oder einem Methacrylat und/oder einem Vinylester einer verzweigten und gesättigten $C_5$-$C_{12}$-Carbonsäure in Schritt ii).

12. Verwendung der Beschichtungsmittel nach einem der Ansprüche 1 bis 11 zum Beschichten von Substraten aller Art.

13. Verwendung nach Anspruch 12, **dadurch gekennzeichnet, dass** die Beschichtungsmittel kunstharzgebundene Putze, pastöse Fliesenkleber, pastöse Dichtmassen und pastöse Versiegelungsmassen sowie Papierstreichmassen oder Anstrichmittel sind.

14. Verwendung der Beschichtungsmittel nach Anspruch 13, **dadurch gekennzeichnet, dass** die Anstrichmittel Dispersionsfarben, Dispersionslacke oder Lasuren sind.

15. Verwendung der Beschichtungsmittel nach Anspruch 14, **dadurch gekennzeichnet, dass** die Beschichtungsmittel Dachbeschichtungen, Fassadenfarben oder Innenfarben sind.

**Claims**

1. A coating composition comprising pigments and/or fillers and a multistage polyvinyl ester dispersion, which is obtainable by

   i) polymerizing at least one vinyl ester of a saturated carboxylic acid and optionally further monomers copolymerizable therewith in the presence of at least one emulsifier and/or at least one protective colloid up to a conversion of at least 90% of the monomers used,
   ii) adding at least one free-radically polymerizable monomer other than the vinyl ester used in step i) in pure form, in the form of a solution or in the form of an emulsion to the polymerization mixture obtained in step i), and
   iii) adding at least one initiator of free-radical polymerization after the addition of the monomer(s) in step ii) has ended and polymerizing the monomers added in step ii) in the presence of the dispersion obtained in step i), wherein
   iv)

      a) in step i) and/or in step ii), at least one monomer containing ethylenically unsaturated silane groups and/or at least one ethylenically unsaturated epoxide compound is used, or wherein
      b) the content of protective colloid, based on the total monomer content is from 0 to less than 1% by weight.

2. The coating composition as claimed in claim 1, wherein the multistage polyvinyl ester dispersion has a screen residue, based on the multistage polyvinyl ester dispersion and measured with a 40 $\mu$m screen, of less than 0.05% by weight, preferably of less than 0.02% by weight.

3. The coating composition as claimed in either of claims 1 or 2, wherein the multi-stage polyvinyl ester dispersion has a content of emulsifiers of up to 5% by weight based on the total mass of monomers used.

4. The coating composition as claimed in claim 3, wherein the multi-stage polyvinyl ester dispersion has a content of emulsifiers of up to 5% by weight, more preferably of less than 3.65% by weight, based on the total mass of monomers used.

5. The coating composition as claimed in claim 1, wherein the multistage polyvinyl ester dispersion comprises no or up to 1% by weight of emulsifiers and is additionally stabilized by less than 1% by weight, based on the total monomer content, of protective colloid.

6. The coating composition as claimed in any one of claims 1 to 5, wherein the content of polymerized acids and/or acid anhydrides in the multistage polyvinyl ester dispersion does not exceed 6% by weight, based on the total amount of monomers.

7. The coating composition as claimed in any one of claims 1 to 6, wherein the polyvinyl ester contains structural units which derive from vinyl acetate and optionally from further vinyl esters of branched and saturated $C_5$-$C_{12}$-carboxylic acids and/or from $\alpha$-olefins.

8. The coating composition as claimed in claim 7, wherein the polyvinyl ester contains structural units which derive from ethylene.

9. The coating composition as claimed in claim 7, wherein the polyvinyl ester contains structural units which derive from acrylate and/or methacrylate and/or vinyl ester of a branched and saturated $C_5$-$C_{12}$-carboxylic acid.

10. The coating composition as claimed in any one of claims 1 to 9, wherein the multistage polyvinyl ester dispersion is obtainable by addition in step ii) of one or more monomers which are selected from the group consisting of the vinyl esters of $C_5$-$C_{18}$ carboxylic acids, the acrylates, the methacrylates, the acrylamides, the methacrylamides, the bisesters of maleic acid with $C_1$-$C_{18}$ alcohols, the bisesters of fumaric acid with $C_1$-$C_{18}$-alcohols and/or the vinylaromatics.

11. The coating composition as claimed in any one of claims 1 to 10, wherein the multistage polyvinyl ester dispersion is obtainable by addition of a combination of vinyl acetate and ethylene in step i) and by addition of at least one acrylate and/or a methacrylate and/or a vinyl ester of a branched and saturated $C_5$-$C_{12}$-carboxylic acid in step ii).

12. The use of the coating compositions as claimed in any one of claims 1 to 11 for coating substrates of all kinds.

13. The use as claimed in claim 12, wherein the coating compositions are synthetic resin-bound plasters, paste-form tile adhesives, paste-form sealants and paste-form sealing compositions, and papercoating slips or paints.

14. The use of the coating compositions as claimed in claim 13, wherein the paints are emulsions paints, other emulsion coatings and glazes.

15. The use of the coating compositions as claimed in claim 14, wherein the coating compositions are roof coatings, façade paints or interior paints.

**Revendications**

1. Agent de revêtement, contenant des pigments et/ou des charges, ainsi qu'une dispersion d'ester de polyvinyle multi-étagée qui peut être obtenue par

i) polymérisation d'au moins un ester de vinyle d'un acide carboxylique saturé et, le cas échéant, d'autres monomères copolymérisables avec ce dernier, en présence d'au moins un émulsionnant et/ou d'au moins un colloïde de protection, jusqu'à un rendement d'au moins 90 % des monomères mis en oeuvre,
ii) addition au mélange de polymérisation obtenu à l'étape i) d'au moins un monomère polymérisable par réaction radicalaire, se distinguant de l'ester de vinyle employé dans l'étape i), sous forme pure, sous la forme d'une solution ou sous la forme d'une émulsion et

iii) addition d'au moins un initiateur de polymérisation radicalaire après la fin de l'addition du ou des monomères à l'étape ii), et polymérisation des monomères ajoutés à l'étape ii) en présence de la dispersion produite à l'étape i), dans lequel

iv)

    a) dans l'étape i) et/ou dans l'étape ii) sont utilisés au moins un monomère contenant des groupes silanes éthyléniquement insaturés et/ou au moins un composé époxyde éthyléniquement insaturé ou dans lequel
    b) la teneur en colloïde de protection, rapportée à la teneur totale en monomère, est de 0 à moins de 1 % en poids.

2. Agent de revêtement selon la revendication 1, **caractérisé en ce que** la dispersion d'ester de polyvinyle multi-étagée présente un refus de tamisage, rapporté à la dispersion d'ester de polyvinyle multi-étagée et mesuré avec un tamis de 40 $\mu$m, de moins de 0,05 % en poids.

3. Agent de revêtement selon l'une quelconque des revendications 1 ou 2, **caractérisé en ce que** la dispersion d'ester de polyvinyle multi-étagée comporte une teneur en émulsionnants pouvant atteindre 5 % en poids, rapportés à la masse totale des monomères mis en oeuvre.

4. Agent de revêtement selon la revendication 3, **caractérisé en ce que** la dispersion d'ester de polyvinyle multi-étagée comporte une teneur en émulsionnants de moins de 3,65 % en poids, rapportés à la masse totale des monomères mis en oeuvre.

5. Agent de revêtement selon la revendication 1, **caractérisé en ce que** la dispersion d'ester de polyvinyle multi-étagée ne contient pas ou contient jusqu'à 1 % en poids d'émulsionnants et **en ce qu'**elle est stabilisée en plus par moins de 1 % en poids de colloïde de protection, rapporté à la teneur totale en monomère.

6. Agent de revêtement selon l'une quelconque des revendications 1 à 5, **caractérisé en ce que** la teneur en acides et/ou en anhydrides d'acide copolymérisés dans la dispersion d'ester de polyvinyle multi-étagée ne dépasse pas 6 % en poids, rapportés à la quantité totale de monomère.

7. Agent de revêtement selon l'une quelconque des revendications 1 à 6, **caractérisé en ce que** l'ester de polyvinyle contient des unités de structure qui dérivent de l'acétate de vinyle et, le cas échéant d'autres esters de vinyle d'acides carboxyliques ramifiés et saturés en $C_5$ à $C_{12}$, ou d'$\alpha$-oléfines.

8. Agent de revêtement selon la revendication 7, **caractérisé en ce que** l'ester de polyvinyle contient des unités de structure qui dérivent de l'éthylène.

9. Agent de revêtement selon la revendication 7, **caractérisé en ce que** l'ester de polyvinyle contient des unités de structure qui dérivent d'un acrylate et/ou d'un méthacrylate, et/ou de l'ester de vinyle d'un acide carboxylique ramifié et saturé en $C_5$ à $C_{12}$.

10. Agent de revêtement selon l'une quelconque des revendications 1 à 9, **caractérisé en ce que** la dispersion d'ester de polyvinyle multi-étagée peut être obtenue par addition, à l'étape ii), d'un ou de plusieurs monomères qui sont choisis parmi le groupe des esters de vinyle d'acides carboxyliques en $C_5$ à $C_{18}$, des acrylates, des méthacrylates, des acrylamides, des méthacrylamides, des bisesters de l'acide maléique avec des alcool en $C_1$ à $C_{18}$, des bisesters de l'acide fumarique avec des alcool en $C_1$ à $C_{18}$ et/ou des vinyles aromatiques.

11. Agent de revêtement selon l'une quelconque des revendications 1 à 10, **caractérisé en ce que** la dispersion d'ester de polyvinyle multi-étagée peut être obtenue par addition à l'étape i) d'une combinaison d'acétate de vinyle et d'éthylène, et par addition à l'étape ii) d'au moins un acrylate et/ou d'un méthacrylate et/ou d'un ester de vinyle, à un acide carboxylique ramifié et saturé en $C_5$ à $C_{12}$.

12. Utilisation des agents de revêtement selon l'une quelconque des revendications 1 à 11 au revêtement de substrats de toute sorte.

13. Utilisation selon la revendication 12, **caractérisée en ce que** les agents de revêtements sont des enduits à liants de résine synthétique, des colles à carreaux pâteuses, des produits d'étanchéité pâteux et des produits de scellement pâteux, ainsi que des produits de couchage du papier et des peintures.

**14.** Utilisation des agents de revêtement selon la revendication 13, **caractérisée en ce que** les peintures sont des peintures à dispersion, des laques à dispersion ou des glacis.

**15.** Utilisation des agents de revêtement selon la revendication 14, **caractérisée en ce que** les agents de revêtement sont des revêtements de toiture, des peintures de façades ou des peintures d'intérieur.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 710675 A
- EP 381122 A
- US 4616057 A
- EP 581264 A
- DE 102006013898 A1
- DE 102005032194 A1
- DE 10236395 A1
- EP 1370621 B1
- DE 10126560 C1
- WO 2006111290 A1
- DE 10122786 A1
- DE 10048888 A1
- DE 10122786
- EP 1174447 A1
- DE 3827975 A
- EP 0417568 A
- DE 3901073 A

**In der Beschreibung aufgeführte Nicht-Patentliteratur**

- **P.A. LOWELL.** Emulsion Polymerization and Emulsion Polymers. Wiley, 1997, 26-31